# EUROPEAN PATENT SPECIFICATION

(11) **EP 1 591 370 B1**
(45) Date of publication and mention of the grant of the patent: **11.04.2007**
(21) Application number: 03777291.0
(22) Date of filing: 05.12.2003
(51) Int. Cl.: B65D 51/00, B65D 45/02, B60K 15/04, F02M 37/00

(54) **COVER BODY MOUNTING STRUCTURE OF RESIN CONTAINER**
MONTAGESTRUKTUR FÜR ABDECKUNG EINES HARZBEHÄLTERS
STRUCTURE DE MONTAGE DE COUVERCLE D'UN CONTENEUR EN RESINE

(30) Priority: 06.12.2002 JP 2002355459; 06.12.2002 JP 2002355462; 09.01.2003 JP 2003002888; 23.05.2003 JP 2003146032; 25.06.2003 JP 2003180860
(43) Date of publication of application: 02.11.2005
(73) Proprietor: Yachiyo Industry Co., Ltd., Sayama-shi, Saitama 350-1335 (JP); HONDA MOTOR CO., Ltd., Tokyo 107-8556 (JP)
(72) Inventor: NAKAMURA, Kazuhiro, Shioya-gun, Tochigi 329-1334 (JP); SATO, Shoji, Shioya-gun, Tochigi 329-1334 (JP); WATANABE, Yoshihiro, Shioya-gun, Tochigi 329-1334 (JP); YOSHIZAWA, Yuji, Shioya-gun, Tochigi 329-1334 (JP); MURABAYASHI, Shinya, Wako-shi, Saitama 351-0193 (JP); MATSUMOTO, Hideki, Wako-shi, Saitama 351-0193 (JP); NAKAMURA, Tadahisa, Wako-shi, Saitama 351-0193 (JP); KANEKO, Naomasa, Wako-shi, Saitama 351-0193 (JP); KOSEKI, Junichi, Wako-shi, Saitama 351-0193 (JP); SATO, Daisuke, Wako-shi, Saitama 351-0193 (JP); NAKAI, Toshiaki, Wako-shi, Saitama 351-0193 (JP); YANASE, Taiki, Wako-shi, Saitama 351-0193 (JP)
(74) Representative: Herzog, Markus
(86) International application number: PCT/JP2003/015599
(87) International publication number: WO 2004/052743

(56) References cited:
- EP-A- 1 179 444
- EP-A- 1 179 445
- EP-A- 1 258 625
- DE-A1- 10 038 268
- JP-A- 2000 127 771
- JP-A- 2001 270 337
- JP-A- 2002 347 453
- JP-U- 59 075 319
- JP-Y1- 49 046 356
- JP-Y2- 63 007 533
- US-B1- 6 357 618

## Description

### TECHNICAL FIELD

This invention relates to cover-mounting structures of a plastic container such as an automotive fuel tank, which container has an opening provided with a cover mounted to close the opening.

### BACKGROUND ART

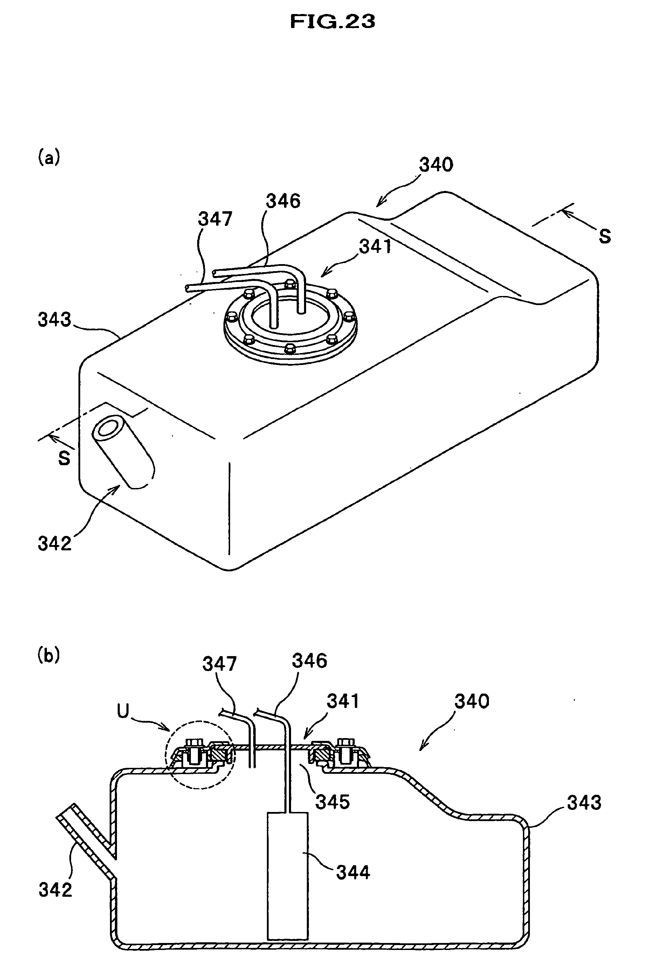

The plastic container provided with an opening at one surface and a cover for closing the opening is employed, for example, as an automotive fuel tank or the like. An example of the automotive fuel tank is schematically illustrated in perspective in FIG. 23(a). A fuel tank 340, as shown in FIG. 23(a), includes a cover 341 and a fitting port 342 to which a fuel feed pipe is coupled. As shown in FIG. 23(b), which is a vertical section taken along line S-S of FIG. 23(a), on top of a fuel tank body 343 is provided an opening 345 to fit a pump module 344 therein, and the opening 345 is closed with the cover 341. Integrally fixed on the cover 341 are a fuel feed passage 346 for supplying an automotive engine with fuel fed from the pump module 344, a fuel recirculation passage 347 through which unconsumed fuel flows back from the engine, and other components.

It has been known in the art to provide a plastic container to be used as a fuel tank which has a holding ring structure for fixing a cover over the opening of a tank body made of plastic. A structure is disclosed in EP 0 816 151 A1, in which a groove for receiving a seal is formed on a top surface of a flange portion around the opening of the plastic tank body, so that the plastic tank body and its cover are fastened together using a holding ring made of metal with the seal being held in the groove.

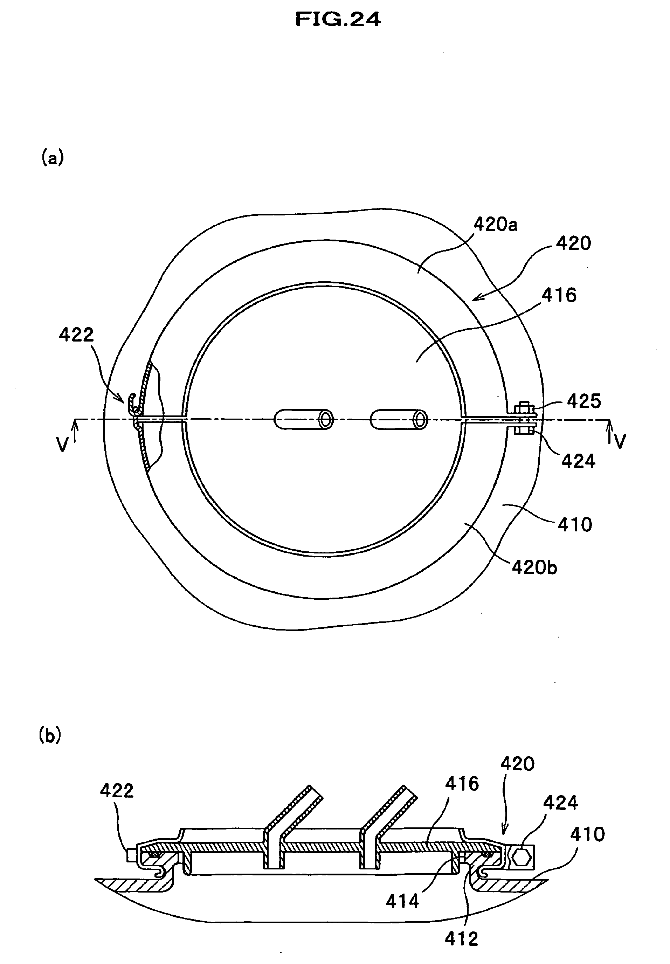

FIG. 24 shows an opening of a fuel tank as embodied according to a conventional example, in which FIG. 24(a) is a plan view of the opening and FIG. 24(b) is a sectional view taken along line V-V of FIG. 24(a).

As shown in FIGs. 24(a) and 24(b), a holding ring 420 made of metal is fitted on a flange portion 412 defining an opening 414 of the fuel tank 410. The holding ring 420 is comprised of segmental rings 420a and 420b, which are hinged on hooks 422 and fastened together using a bolt 424 and a nut 425. These segmental rings 420a, 420b clamp a holding plate 416 as a cover of a fuel tank 410 to the flange portion 412, thereby hermetically closing the fuel tank 410.

Another structure is disclosed in JP 2002-187162 A (US 2002/079416 A) in which on top of a plastic body of a tank is fitted an upper plate or the like made of metal through which filler tubes and the like are led out of the tank, and a camlock member made of metal that has been insert-molded in the plastic body of the tank is provided for fixing the upper plate.

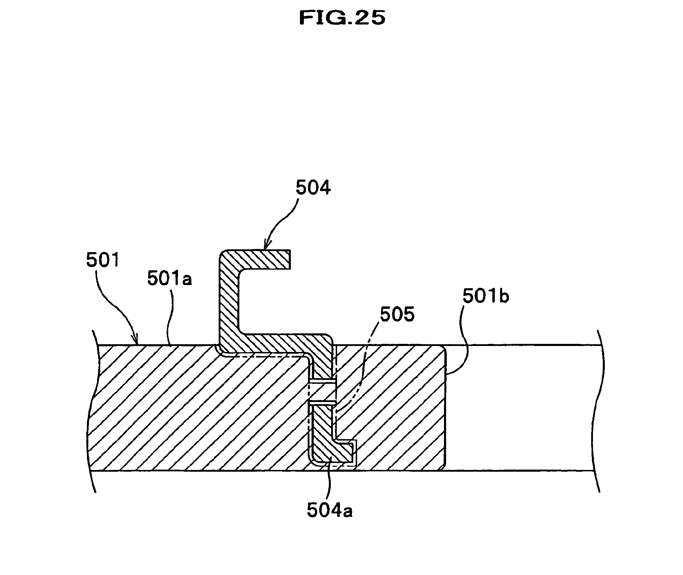

A metal upper plate (not shown) or the like through which filler tubes (not shown) and the like are led out is fitted on top of a plastic tank body 501a that, as shown in FIG. 25, constitutes a part of a fuel tank 501 having an insert-molded structure. This tank body 501a is injection-molded using a high-density polyethylene (HDPE) as raw materials, with a metal camlock member 504 for fixing the upper plate on a top surface of the tank body 501a being insert-molded therein. This camlock member 504 has a leg portion 504a to be embedded in a wall of the tank body 501a and a coating layer 505 is formed on peripheries of the leg portion 504a by applying powder resin coating thereto beforehand. The camlock member 504 is so placed as to allow this leg portion 504a to be embedded in a peripheral edge of a plate opening 501b by an insert molding process which opening is formed in the tank body 501a. On the leg portion 504a of the camlock member 504, a thermoplastic polyethylene resin material of the same kind as used to mold the tank body 501a is applied to powder coat the surface thereof. The polyethylene resin material has a high fusibility, and thus, once applied, spreads substantially equally over the surface of the leg portion 504a. Moreover, the camlock member 504 is heat-treated or baked at a high temperature during the powder coating process, so that powder of polyethylene resin material is baked and adhered strongly to the surface of the leg portion 504a. Insert molding process is then performed so that the leg portion 504a is embedded in the tank body 501a. Thus baked and strongly adhered polyethylene resin powder serves to enhance the adhesion between the tank body 501a and the camlock member 504 that have been combined together by the action of resin materials fused with each other.

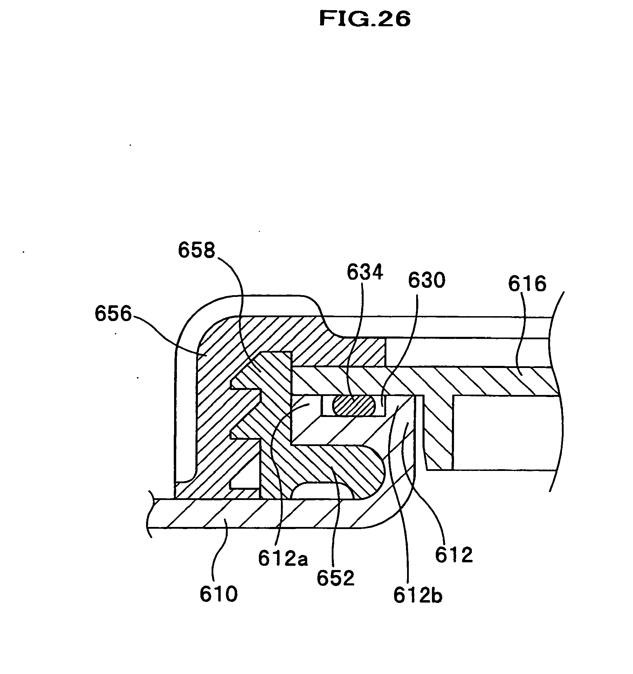

As shown in FIG. 26, a seal groove 630 is provided in a flange portion 612 defining the opening of the fuel tank 610 at an upper surface thereof; a seal 634 that is shaped like a ring and substantially circular in section are fitted in the seal groove 630. A holding plate 616, provided as a cover for the fuel tank 610, presses the seal 634 and comes into contact with ribs 612a, 612b. This allows the holding plate 616 to hermetically close the opening of the fuel tank 610.

In a conventional plastic fuel tank, a fuel pump having a portion to be inserted into the fuel tank is mounted on a mount plate, and fixed to the fuel tank. The fuel tank thus has an opening for fitting the mount plate therein, and the mount plate fitted in the opening has a sealing structure for liquid-tightly closing the fuel tank. To that end, a structure known in the art provides a threaded portion integrally formed at the opening of a plastic fuel tank and a plastic cap member to be screwed onto the threaded portion with a mount plate of the fuel pump held between the cap member and the plastic fuel tank, thereby fixing the fuel pump to the fuel tank. One example of this structure is disclosed in JP 2002-80054 A.

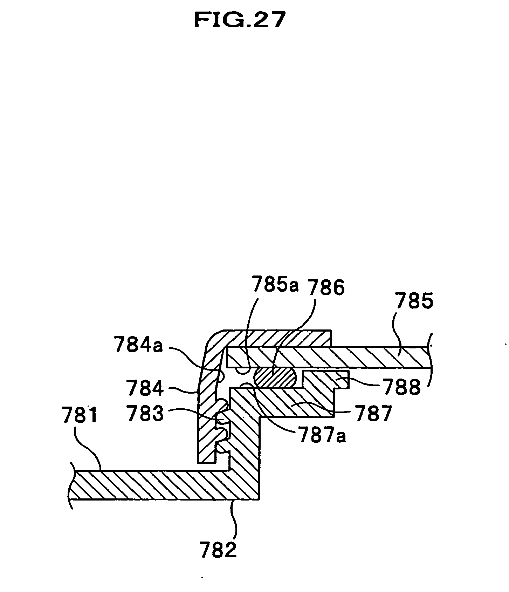

FIG. 27 shows a part fixing portion serving to seal the opening of the plastic fuel tank. As shown in FIG. 27, the part fixing portion is formed, integrally with a plastic tank body 781 that has been blow-molded or otherwise formed, at a wall of the tank body 781, and so configured as to project outwardly from a peripheral edge of an opening 782 thereof; a cover plate (mount plate) 785, which a part (not shown) has been mounted on and become integral with, is held between a cylindrical threaded portion 783 formed integrally with the tank body 781 and a lock nut (nut member) 784, and an internal thread cut on an inner cylindrical surface of the lock nut 784 is screwed on an external thread cut on an outer cylindrical surface of the cylindrical threaded portion 783, so that the part mounted in the cover plate 785 is fixed to the tank body 781.

The part fixing portion has a sealing structure in which an annular seal 786 is fitted around the periphery of a reducer portion 788, which is provided at an edge of the cylindrical threaded portion 783 with a radial portion 787 lying therebetween, so that screwing the lock nut 784 on allows the seal 786 to be pinched between a seal surface 787a extending radially on an upper side of the radial portion 787 and a seal surface 785a formed opposite thereto on an under side of the cover plate 785, thereby exerting its sealing capability. Around the periphery of the seal 786 is provided a substantially vertically curved cylindrical surface 784a formed on the inner cylindrical surface of the lock nut 784 near the seal 786 as a restrictive means for restricting the expanded seal 786 from protruding in radially outward directions. The cylindrical surface 784a serves to restrict the outward protrusion of the seal 786. Therefore, the outward protrusion beyond a position at which the cylindrical surface 784a places a restriction on the seal 786 that is likely to expand as a result of absorption of fuel components. This makes the seal 786 kept from shifting away from the positions at which it is adhered to the seal surfaces 785a, 787a and from changing considerably in cross-sectional shape, thereby serving to prevent diminishment in sealing properties.

The applicant of the present application has filed Japanese Patent Application JP 2004-189235 A entitled "Cover-Mounting Structure of Fuel Tank".

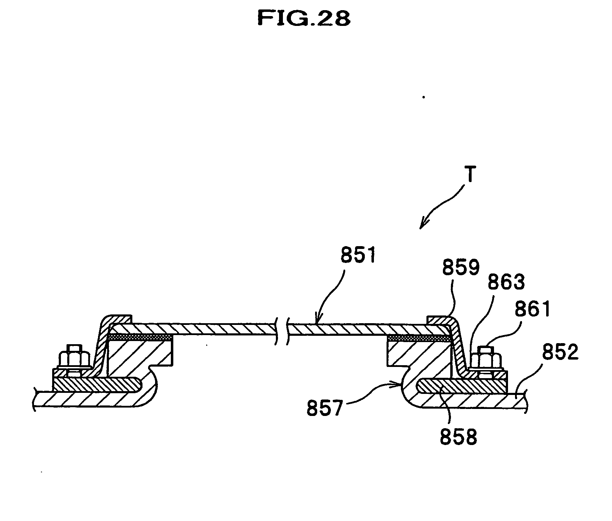

FIG. 28 is a sectional view of a portion around an opening of a fuel tank T according to the invention (directed to a cover-mounting structure of a fuel tank) disclosed in the above JP 2004-189235 A. As shown in FIG. 28, an annular member 858 made of metal is insert-molded in a tank body 852 made of plastic. Bolts 861 that are embedded integrally in the annular member 858 made of metal are also made of metal, and a retainer 859 made of metal is fastened to the annular member 858 using the bolts 861 together with nuts 863. This makes it possible to bring a portion 857 around the opening of the tank body 852 made of plastic and a cover 851 into good and close contact with each other, and firmly fix them together. Consequently, at the portion 857 around the opening provided in the tank body 852 of the fuel tank T, the cover 851 can be hermetically attached to the portion 857 around the opening.

In the field of art directed to cover-mounting structures of a plastic container such as an automotive fuel tank, it has been generally known to provide a mounting part for fixing a cover over an opening of a plastic container body, and a supporting part for fixing the mounting part. For example, a structure as shown in FIG. 29, which is an enlarged view of portion D of FIG. 23(b), is disclosed in JP 2003-72824 A.

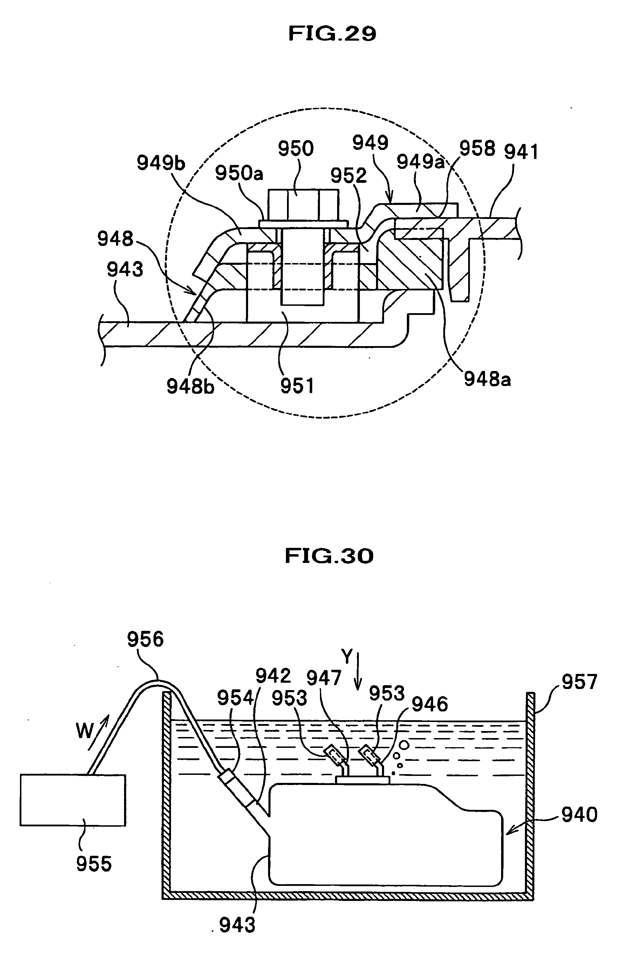

As shown in FIG. 29, an annular seal 948 is provided between a fuel tank body 943 and a cover 941, and the seal 948 includes a fuel leakage prevention portion 948a provided in its inner region and a water-tight portion provided in its outer region. The cover 941 is mounted on the fuel tank body 943 by fastening an outer region 949b of a mounting part 949 to a supporting part 951 with a bolt 950 having a flange portion 950a while pressing the cover 941 from outside with an inner region 949a of the mounting part 949.

For a plastic container having the aforementioned cover-mounting structure, for example in a case where it is particularly used for an automotive fuel tank, a submergence leak test as shown in FIG. 30 may be performed in order to assess a sealing performance. In this leak test, first, a fuel feed passage 946 and a fuel recirculation passage 947 are plugged with blanking jigs 953, 953, and a pressurizing spigot jig 954 is provided in a socket 942; further, the pressurizing spigot jig 954 and a pressure regulator 955 are connected together by a pipe 956, and thereafter a fuel tank 940 is submerged into a water tank 957 filled with water. Subsequently, air of which pressure is regulated by the pressure regulator 955 is flowed in a direction indicated by arrow W, and air is thus introduced into the fuel tank body 943, so that pressure within the fuel tank body 943 is increased to a predetermined level.

If the fuel tank 940 has a leak, bubbles formed at a spot where the leak would occur rise and swell in the water; thus, visual observations, made from a direction indicated by arrow Y, of the bubbles show whether the fuel tank 940 has a leak at any spot.

Among the aforementioned conventional examples, however, the structure which is configured to have a holding ring divided into two segments which are in turn fastened together using a bolt/nut pair so as to clamp a cover disadvantageously could not exercise sufficient fastening strength.

In addition, such a divided holding ring could hardly form a perfect circle, and thus segmentally contact the outer surface of the wall defining the opening of the tank body, which would disadvantageously make its sealing performance insecure.

The structure which is configured to have a holding ring (camlock member) embedded in the external surface of the wall of the tank body made of plastic by an insert molding process would sever a barrier layer of the plastic tank body, which would undesirably affect a layer structure thereof.

Further, among the aforementioned conventional examples is a structure in which a surface for seal installation is provided near the opening of the tank body made of plastic, a groove is formed in the surface for seal installation, and a seal is placed in the groove. The problems encountered in this structure are: it would be difficult to ensure dimensional accuracy of the height of the upper surface on either side of the groove which height is measured when the upper surface comes into contact with the holding plate, and particularly to control the dimensional accuracy in a blow molding process; it would be difficult to finish a bottom surface of the groove to the highest standard in surface roughness, with the result that good sealing performance could not be achieved.

On the other hand, the structure in which the fuel tank is made of plastic, and a tank body thereof and a cover plate (mount plate) as a cap member are made of plastic would undergo deterioration effects of time on plastic material, disadvantageously lowering the accuracy and strength of a portion where the part fixing portion is mounted.

Since still another of the aforementioned conventional examples in which the tank body is made of plastic would allow the tank body to shrink by heat with the passage of time, disadvantageously, the accuracy of a joint portion where the annular member and the tank body (plastic container) are joined together could hardly be improved.

Furthermore, the cover-mounting structure as shown in FIG. 28 is configured to have the mounting part 49 fastened to the supporting part 51, with the result that an enclosed hollow space 52 is provided, and thus bubbles which would be derived from air in the enclosed hollow space 52 could possibly be identified erroneously as the bubbles generated from inside of the fuel tank body 43.

In order to avoid such an erroneous identification, at a stage after the fuel tank 40 is submerged in the water tank 57 and before pressure-regulated air is introduced therein, you should wait until the enclosed hollow space 52 becomes filled with water flown through very small gaps, for example, a gap 58 between the mounting part 49 and the cover 41, which necessarily results in an extended period of time for completion of the test. Moreover, even in this instance, if air in the enclosed hollow space 52 could not have been removed, bubbles derived from the air remaining in the enclosed hollow space 52 could possibly appear during the test; therefore, erroneous identification could not be avoided in any event.

The present invention was made to solve the above-described problems, and is directed to provide a cover-mounting structure of a plastic container in which the layer structure of a barrier layer provided in the plastic container is not affected, a high fastening strength is exercised between an opening provided in the plastic container and a cover, a good and secure sealing performance can be achieved, the accuracy and strength of a portion where a cover and a tank body are joined together will not lower with the passage of time, an annular member can be mounted with improved accuracy, and a submergence leak test can be performed easily with excellent accuracy within a shortened period of time.

EP-1179444 A2 discloses a cover mounting structure in accordance with the preamble 1 of claims 1 and 6.

### DISCLOSURE OF INVENTION

According to a first aspect of the invention, there is provided a cover-mounting structure of a plastic container having a cover for closing an opening provided in a plastic container body at least part of which is made of a barrier material, wherein a portion of the plastic container where the opening is provided has a flange portion; the cover-mounting structure of the plastic container comprising: a recess provided annularly along a peripheral edge of the opening at an outside of the plastic container body, with an annular member being embedded integrally in the recess; the cover resting against the flange portion to close the opening; a seal provided between the flange portion and the cover to prevent a leak; and an annular retainer fastened to the annular member while resting against an external surface of the cover, characterized by an outer rib projecting upwardly from an outer edge of a top surface of the flange portion; and an inner rib projecting downwardly from an undersurface of an outer edge portion of the cover toward the top surface of the flange portion, wherein the seal is provided in a space defined between the outer rib and the inner rib; and wherein the outer rib comes into contact with the undersurface of the outer edge portion of the cover when the cover is placed over the opening.

In this cover-mounting structure of a plastic container having a construction as described above, a seamless annular member is embedded in a portion around an opening of a tank body made of plastic to form an integral part thereof, and thus the strength of fastening between the plastic tank body and the cover can be improved.

Further, an annular member assumes an undivided ring-shaped geometry with no local rigidity variation point that would be involved at seams of a ring-shaped geometry, and thus good hermetical sealing performance between the tank body and the cover can be stably achieved.

Further, an annular member is not cut into an external wall of the tank body made of plastic so as not to sever a barrier layer of the plastic tank body, and thus the possibility of affecting a layer structure thereof can be eliminated.

In this cover-mounting structure of a plastic container having a construction as described above, an outer rib comes into contact with a cover prior to an inner rib, which lightly touches or does not touch a flange portion, and thus the outer rib can be brought into secure and close contact with the cover; further, a space for providing a seal can be made between the outer rib and the inner rib, and thus excellent hermetical sealing performance can be achieved. Moreover, an inner rib does not strongly press a surface where a seal is placed, and thus deformation of the surface where the seal is placed can be prevented so that good hermetical sealing performance can be achieved.

The cover-mounting structure of a plastic container according to the present invention may be characterized in that a plurality of bolts for fastening the retainer are provided protrusively in the annular member.

In this cover-mounting structure of a plastic container having a construction as described above, insert bolts are provided protrusively in an annular member, and with nuts screwed on the bolts, a retainer can be firmly fastened; thus, the strength of fastening between the plastic tank body and the cover can be improved.

The cover-mounting structure of a plastic container according to the present invention may be characterized in that a screw hole is provided vertically in the annular member.

In this cover-mounting structure of a plastic container, a screw hole is provided vertically in an annular member, and with a bolt screwed into the screw hole, a retainer can be firmly fastened; thus, the strength of fastening between the plastic tank body and the cover can be improved.

The cover-mounting structure of a plastic container according to the present invention may be characterized in that the annular member and the retainer are formed of metal materials.

In this cover-mounting structure of a plastic container having a construction as described above, an annular member and a retainer for fixing the annular member are formed of metal materials, and thus the retainer can be firmly fastened, so that the strength of fastening between the plastic tank body and the cover can be improved.

The cover-mounting structure of a plastic container according to the present invention may be characterized in that a thread is formed on an outer or inner cylindrical surface of the annular member.

In this cover-mounting structure of a plastic container having a construction as described above, a thread is formed on an outer or inner cylindrical surface of an annular member, and thus the annular member can be fastened firmly to a retainer, so that the strength of fastening between the plastic tank body and the cover can be improved.

According to another aspect of the invention, there is provided a cover-mounting structure of a plastic container having a cover for closing an opening provided in a plastic container body at least part of which is made of a barrier material, wherein a portion of the plastic container where the opening is provided has a flange portion; the cover-mounting structure of the plastic container comprising: a recess provided annularly along a peripheral edge of the opening at an outside of the plastic container body, with an annular member being embedded integrally in the recess; the cover resting against the flange portion to close the opening; a seal provided between the flange portion and the cover to prevent a leak; and an annular retainer fastened to the annular member while resting against an external surface of the cover, characterized by an outer rib projecting upwardly from an outer edge of a top surface of the flange portion; and a seal guide shaped like a letter L in cross section so as to conform to a shape of a corner at an inner edge of the top surface of the flange portion, wherein the seal is provided in a space defined between the outer rib and the seal guide.

In this cover-mounting structure of a plastic container having a construction as described above, a space is defined between an outer rib projecting upwardly from an outer edge of a top surface of flange portion, and a seal guide shaped like a letter L in cross section so as to conform to a shape of a corner at an inner edge of the top surface of the flange portion, and further a space where a seal is placed can be made between the outer rib and the seal guide; therefore, the outer rib can come into secure and close contact with the cover, so that good hermetical sealing performance can be achieved.

Preferably, the seal guide is of a soft resin having a fuel barrier property against HDPE (high-density polyethylene) with solubility parameter of 11 or greater, or of a soft EVOH (alcohol copolymer).

In this cover-mounting structure of a plastic container having a construction as described above, the seal guide is of a soft resin having a fuel barrier property against HDPE (high-density polyethylene) with solubility parameter of 11 or greater, or of a soft EVOH (alcohol copolymer), and thus has an excellent flexibility and an excellent barrier property, so that a good hermetical sealing performance and an inhibitive effect of preventing HC (hydrocarbon) from being transmitted can be achieved as a sub-seal.

The cover-mounting structure of a plastic container according to the present invention may comprise a metal ring provided between an area of a top surface of an outer edge portion of the cover under which area the seal is placed and a surface of the retainer which presses the cover, wherein the metal ring has a spring tension acting in such a direction that the portion of the plastic container where the opening is provided is pressed by the cover.

In this cover-mounting structure of a plastic container having a construction as described above, a metal ring has a spring tension acting in such a direction that the portion of the plastic container where the opening is provided is pressed by the cover, and the spring tension serves to make up for the change in positioning and strength between the joined portions of the cover and a portion around the opening, and can thereby maintain a predetermined level of the positioning accuracy and adequate strength; therefore, the change caused by the time-varying plastic materials in positioning and strength between the joined portions of the cover (mount plate) and the tank body can be prevented from lowering.

The cover-mounting structure of a plastic container according to the present invention may be characterized in that the retainer has a spring tension acting in such a direction that the portion where the opening is provided is pressed by the cover.

In this cover-mounting structure of a plastic container having a construction as described above, a retainer has a spring tension acting in such a direction that a portion where an opening is provided is pressed by a cover, and the spring tension serves to make up for the change in positioning and strength between the joined portions of the cover and a portion around the opening, and can thereby maintain a predetermined level of the positioning accuracy and adequate strength; therefore, the change caused by the time-varying plastic materials in positioning and strength between the joined portions of the cover (mount plate) and the tank body can be prevented from lowering.

The cover-mounting structure of a plastic container according to the present invention may comprise a metal ring provided between an area of a top surface of an outer edge portion of the cover under which area the seal is placed and a surface of the retainer which presses the cover, wherein the metal ring has a spring tension acting in such a direction that the portion of the plastic container where the opening is provided is pressed by the cover, wherein pump fittings are integrally mounted in the cover.

In this cover-mounting structure of a plastic container having a construction as described above, pump fittings are integrally mounted in the cover, and thus no clearance remains between the pump fittings and the cover; therefore, the hermetical sealing performance between the cover (mount plate) and the tank body can be improved.

The cover-mounting structure of a plastic container according to the present invention may be characterized in that the annular member and the retainer are formed of metal materials, and in the plastic container body immediately after plastic molding, a space to be allowed for thermal contraction of plastic is provided between an outer inside wall of the recess and an outer cylindrical end face of the annular member.

In this cover-mounting structure of a plastic container having a construction as described above, a space to be allowed for thermal contraction of plastic is provided between an outer inside wall of an annularly arranged recess and an outer cylindrical end face of the annular member, and thus when the thermal contraction is completed after plastic molding, the outer cylindrical end face of the annular member and outer inside wall of the annular recess come into contact with each other. This allows the annular member and the plastic container body to be firmly joined together, serving to maintain a good hermetical sealing performance of the opening, as well as to improve positioning accuracy of the annular member.

The cover-mounting structure of a plastic container according to the present invention may be characterized in that the annular member and the retainer are formed of metal materials, and in the plastic container body immediately after plastic molding, a space to be allowed for thermal contraction of plastic is provided between an outer inside wall of the recess and an outer cylindrical end face of the annular member, wherein the annular member is so shaped as to be kept from obstructing the thermal contraction of the plastic container, and includes a plurality of bolts provided protrusively at annularly arranged positions along a peripheral edge of the opening.

In this cover-mounting structure of a plastic container having a construction as described above, the metal annular member is so shaped as to be kept from obstructing the thermal contraction of the plastic container, and thus bending or deformation due to local internal shrinkage of thermally contracting plastic materials can be prevented, so that the metal annular member can be slid smoothly in the recess. Further, the metal annular member includes a plurality of bolts provided protrusively at annularly arranged positions along a peripheral edge of the opening, and thus a good hermetical sealing performance of the opening can be maintained, and positioning accuracy of the annular member can be improved.

The cover-mounting structure of a plastic container according to the present invention may be characterized in that the annular member and the retainer are formed of metal materials, and in the plastic container body immediately after plastic molding, a space to be allowed for thermal contraction of plastic is provided between an outer inside wall of the recess and an outer cylindrical end face of the annular member, and in the plastic container body thermally contracted after plastic molding, the outer inside wall of the recess and the outer cylindrical end face of at least one of the annular member and the bolts are in contact with each other.

In this cover-mounting structure of a plastic container having a construction as described above, the outer inside wall of the recess and the outer cylindrical end face of at least one of the annular member and the bolts are in contact with each other, and thus no clearance remains between the annular member and the outer inside wall of the recess, which allows the annular member and the plastic container body to be firmly joined together, serving to maintain a good hermetical sealing performance of the opening, as well as to improve positioning accuracy of the annular member.

The cover-mounting structure of a plastic container according to the present invention may be characterized in that the annular member and the retainer are formed of metal materials, wherein in the plastic container body immediately after plastic molding, a space to be allowed for thermal contraction of plastic is provided between an outer inside wall of the recess and an outer cylindrical end face of the annular member, and wherein in the plastic container body after plastic molding, a bottom surface of the space is in a position lower than bottom surfaces of the annular member and the bolts.

In this cover-mounting structure of a plastic container having a construction as described above, the bottom surface of the space formed in the recess is in a position lower than bottom surfaces of the annular member and the bolts, and thus the outer cylindrical end faces of the bolts can be brought into close contact with the inside wall of the recess, which serves to maintain a good hermetical sealing performance of the opening, as well as to improve positioning accuracy of the annular member and the plastic container body.

The cover-mounting structure of a plastic container according to the present invention may be characterized in that the annular member and the retainer are formed of metal materials, wherein in the plastic container body immediately after plastic molding, a space to be allowed for thermal contraction of plastic is provided between an outer inside wall of the recess and an outer cylindrical end face of the annular member, and wherein in the plastic container body thermally contracted after plastic molding, a drainage passage is provided in an external surface of the plastic container body to drain water that tends to stay in or around interfaces between the recess and the annular member and between the recess and the bolts.

In this cover-mounting structure of a plastic container having a construction as described above, a drainage passage is provided in an external surface of the plastic container body to drain water that tends to stay in or around interfaces between the recess and the annular member and between the recess and the bolts, and thus the interfaces between the bottom surfaces of the annular recess and the annular member and spaces around the interfaces are allowed to communicate by means of the drainage passage, which allows water to drain to the outside, so as to prevent the formation of rust, serving to maintain a good hermetical sealing performance of the opening, as well as to improve positioning accuracy of the annular member and the plastic container body.

The cover-mounting structure of a plastic container according to the present invention may be characterized in that the annular member and the retainer are formed of metal materials, wherein in the plastic container body immediately after plastic molding, a space to be allowed for thermal contraction of plastic is provided between an outer inside wall of the recess and an outer cylindrical end face of the annular member, and wherein the annular member is insert-molded with a plastic material from which the plastic container body is molded to form the plastic container body.

In this cover-mounting structure of a plastic container having a construction as described above, the annular member is insert-molded with a plastic material from which the plastic container body is molded to form the plastic container body, and thus the annular member and the plastic container body can be mounted with improved accuracy, which provides effective countermeasures when collision or the like occurs.

The cover-mounting structure of a plastic container according to the present invention may be characterized in that a through hole is provided to allow a space formed on a side of the retainer facing the plastic container body by fastening the retainer to the annular member to communicate with outside.

In this cover-mounting structure of a plastic container having a construction as described above, when the plastic container is submerged into a water tank during a submergence leak test, water is allowed to flow through the through hole to fill up the space for a short period of time. Accordingly, no extra time to wait is required from submergence of the plastic container into the water tank to introduction of pressure-regulated air, and therefore the time for testing can be reduced. Moreover, the evolution of bubbles derived from air in the space during the test can be prevented so as not to make an erroneous identification as described above. Consequently, the submergence leak test can be performed with improved accuracy.

The cover-mounting structure of a plastic container according to the present invention may be characterized in that a through hole to allow a space formed on a side of the retainer facing the plastic container body by fastening the retainer to the annular member to communicate with outside is provided in the retainer.

In this cover-mounting structure of a plastic container having a construction as described above, the through hole is provided in the retainer, and assuming that the bottom of the plastic container faces toward downward while the cover is located on its top, the through hole allows the space to immediately communicate at its top. Therefore, air that was in the space at the time of submergence of the plastic container into the water tank is discharged swiftly through the through hole by which the space communicates at its top. As a result, in the submergence leak test, the evolution of bubbles derived from air in the space during the test can be prevented without fail, and the submergence leak test can be performed with much more improved accuracy.

The cover-mounting structure of a plastic container according to the present invention may be characterized in that a through hole to allow a space formed on a side of the retainer facing the plastic container body by fastening the retainer to the annular member to communicate with outside is provided between the annular member and an external wall of the plastic container body to which the annular member is fastened, or between the retainer and the annular member.

In this cover-mounting structure of a plastic container having a construction as described above, the through hole is provided which allows the space to immediately communicate at its bottom, and thus when the plastic container is raised from the water tank after the submergence leak test has been carried out, water with which the space is filled can be discharged swiftly through the through hole. Accordingly, the process for drying the plastic container after the test can be performed with increased ease, and corrosion of constituent parts, which would result from residual water after the test, can be prevented.

Further, even if the plastic container is submerged into water in normal times of use, water flowed into the space can be drained through the through hole; thus corrosion of constituent parts, which would otherwise result from submergence in normal times of use, can also be prevented.

Further, in a case where another through hole which allows the space to immediately communicate at its top is provided in addition to the through hole which allows the space to immediately communicate at its bottom, when water is discharged through the through hole which allows the space to immediately communicate at its bottom after a submergence leak test has been carried out, the pressure of air flowed into the space pushes water in the space, so that the water can be discharged more swiftly. Accordingly, a process for drying the plastic container after the test can be performed with further increased ease, and corrosion of constituent parts, which would result from residual water after the test, can be prevented more effectively. Furthermore, corrosion of constituent parts, which would result from submergence in normal times of use, can also be prevented with a high degree of reliability.

### BRIEF DESCRIPTION OF DRAWINGS

FIG. 1 schematically shows a cover-mounting structure of a fuel tank according to a first embodiment; (a) is a perspective view, and (b) is a vertical sectional view taken along line A-A of (a), not covered by the present claims.
FIG. 2 shows: (a) an enlarged sectional view of portion B of FIG. 1(a); and (b) an enlarged and exploded view of portion C of (a).
FIG. 3 shows: (a) an enlarged sectional view of a cover-mounting structure of a fuel tank according to a second embodiment ; and (b) an enlarged sectional view of a cover-mounting structure of a fuel tank according to a third embodiment, each not covered by the present claims.
FIG. 4 shows: (a) an enlarged sectional view of a cover-mounting structure of a fuel tank according to a fourth embodiment; (b) an enlarged sectional view of a cover-mounting structure of a fuel tank according to a fifth embodiment ; and (c) an enlarged sectional view of a cover-mounting structure of a fuel tank according to a sixth embodiment, each not covered by the present claims.
FIG. 5 shows: (a) an enlarged sectional view of a cover-mounting structure of a fuel tank according to a seventh embodiment; and (b) an enlarged sectional view of a cover-mounting structure of a fuel tank according to a eighth embodiment, each not covered by the present claims,
FIG. 6 schematically shows a cover-mounting structure of a fuel tank according to a ninth embodiment of the present invention; (a) is an enlarged sectional view of portion B of FIG. 1, and (b) is an enlarged sectional view of portion D of (a).
FIG. 7 is an enlarged and exploded sectional view of FIG. 6 (b) for explaining relative positioning of an opening and a cover included therein.
FIG. 8 is an enlarged sectional view of a modified example of the arrangement shown in FIG. 6 (b), schematically showing a cover-mounting structure of a fuel tank according to a tenth embodiment of the present invention.
FIG. 9 is an enlarged sectional view of portion B of FIG. 1, schematically showing a cover-mounting structure of a fuel tank according to an eleventh embodiment of the present invention.
FIG. 10 is a detailed sectional view showing portion E of FIG. 9.
FIG. 11 is a schematic illustration of a metal ring, in which (a) is a plan view, and (b) is a vertical sectional view taken along line F-F of (a).
FIG. 12 is an enlarged sectional view of portion B of FIG. 1, schematically showing a cover-mounting structure according to a twelfth embodiment of the present invention.
FIG. 13 is a detailed view sectionally showing portion G of FIG. 12.
FIG. 14 is a schematic illustration of a retainer, in which (a) is a plan view, and (b) is a vertical sectional view taken along line H-H of (a).
FIG. 15 is a perspective view schematically showing a fuel tank according to a thirteenth embodiment, not covered by the present claims;
FIG. 16 shows: (a) a vertical sectional view taken along line I-I of FIG. 15; and (b) an illustration of portion J of (a) as viewed from arrow B.
FIG. 17 is a vertical sectional view of portion Q of FIG. 16(a).
FIG. 18 represents enlarged sectional views showing portion L of FIG. 17, in which (a) is a sectional view of a portion around an opening immediately after plastic molding, and (b) is a sectional view of the portion around the opening which has completely been thermally contracted after plastic molding.
FIG. 19 is a sectional view taken along line K-K of FIG. 16(b).
FIG. 20 is an exploded perspective view of a cover-mounting structure of a plastic container according to a fourteenth embodiment not covered by the present claims,
FIG. 21 is a diagram representing the cover-mounting structure of which constitutional parts shown in FIG. 20 are assembled together, in which (a) is a plan view, (b) is a vertical sectional view taken along line N-N of (a), and (c) is a vertical sectional view taken along line P-P of (a).
FIG. 22 shows several views of a cover-mounting structure of a plastic container according to a fifteenth embodiment, in which (a) is a vertical sectional view of a portion where a mounting part and a supporting part are fastened, and (b) is a vertical sectional view of a through hole, not covered by the present claims;
FIG. 23 schematically shows a plastic container having a conventional cover-mounting structure; (a) is a general view in perspective, and (b) is a vertical sectional view taken along line S-S of (a).
FIG. 24 is a diagram schematically showing a conventional holding ring of a cover of a fuel tank, in which (a) is a side view in section, and (b) is a plan view thereof.
FIG. 25 is sectional view schematically showing an insert-molded structure provided in a conventional plastic tank.
FIG. 26 is a sectional view schematically showing a conventional cover-mounting structure of a fuel tank.
FIG. 27 is a sectional view schematically showing a conventional example of a cover-mounting portion, in which a portion corresponding to portion E of FIG. 9 is depicted.
FIG. 28 is a sectional view schematically showing a conventional cover-mounting structure of a fuel tank.
FIG. 29 is an enlarged view of portion U of FIG. 23(b).
FIG. 30 is a schematic diagram for illustrating a process of performing a submergence leak test.

### BEST MODES FOR CARRYING OUT THE INVENTION

A description will be given one by one of embodiments of a cover-mounting structure of a fuel tank according to the present invention with reference to the drawings.

### [First Embodiment]

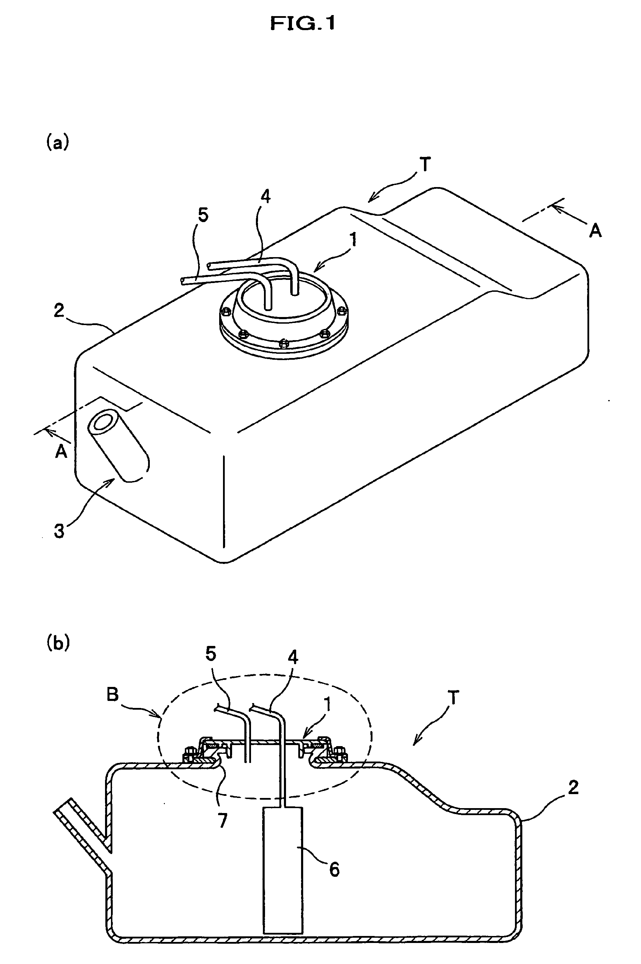

FIG. 1 schematically shows a fuel tank according to a first embodiment; FIG. 1(a) is a perspective view of a cover-mounting structure, and FIG. 1(b) is a vertical sectional view taken along line A-A of FIG. 1(a). As shown in FIGs. 1(a) and 1(b), a fuel tank T, at least part of which plastic tank body is of a barrier material, includes a plastic tank body 2 for storing fuel and an opening 7 provided in the tank body 2, whereas a cover 1 is mounted over the opening 7. On the cover 1, integrally fixed thereto are a fuel feed passage 4 for supplying an automotive engine with fuel fed from a fuel pump 6 provided in the plastic tank body 2, a fuel recirculation passage 5 through which unconsumed fuel flows back from the engine, and other components. In the plastic tank body 2 is provided a fitting port 3 to which one end of a fuel feed pipe is to be coupled while the other end thereof is to open on a vehicle body of an automobile.

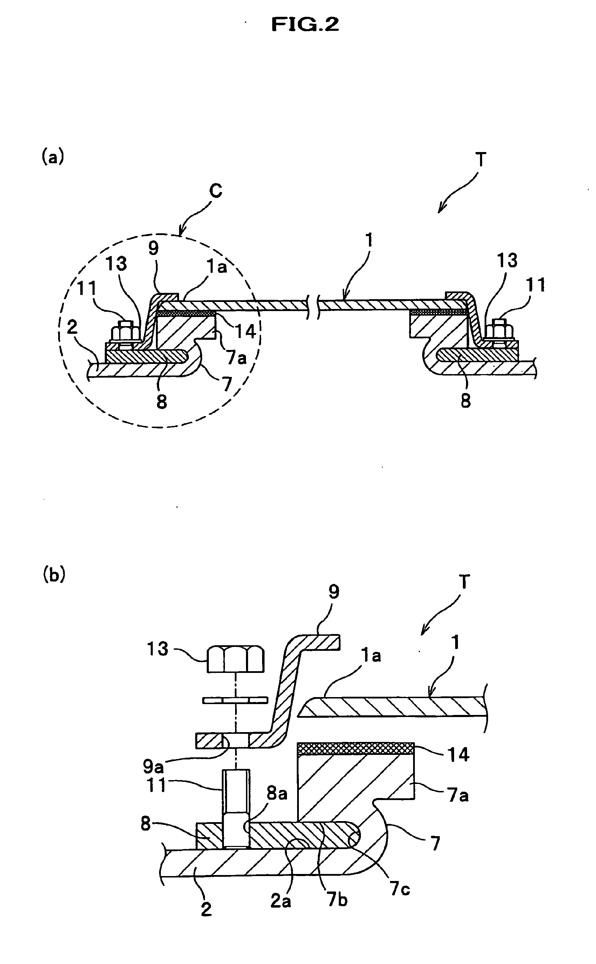

FIG. 2 schematically shows the cover 1 of the fuel tank according to the first embodiment; FIG. 2(a) is an enlarged sectional view of portion B of FIG. 1(b), and FIG. 2(b) is an exploded sectional view of portion C of FIG. 2(a). As shown in FIG. 2(a), the cover 1 is mounted over the opening 7 provided in the tank body 2 of the fuel tank T. At an edge of the opening 7 is formed a flange portion 7a, and a seal 14 is placed annularly on a top surface of the flange portion 7a, so that a leak between the flange portion 7a and the cover 1 is prevented. Around the opening 7, an annular member 8 that is larger in diameter than the opening 7 and made of metal is embedded by an undersurface 7b of the flange portion 7a, a recessed outside wall 7c provided around the opening 7, and a tank outside wall 2a.

The annular member 8 is provided in a manner that allows the tank outside wall 2a to become recessed and tucked up around an inner periphery of the annular member 8 so that the annular member 8 is held by the tank body 2. A separately provided retainer 9 made of metal is formed in a manner that allows one end portion (inner peripheral portion) of the retainer 9 to come into contact with an outer edge portion 1a of the cover 1 serving to hermetically close the opening 7 while the other end portion (outer peripheral portion) of the retainer 9 is in contact with the annular member 8, thereby fastening the cover 1 to the tank body 2. In the end portion (outer peripheral portion) of the retainer 9 is provided a retainer hole 9a through which a bolt 11 is to be inserted.

As shown in FIG. 2(b), according to the first embodiment, the annular member 8 is joined integrally to an outside of a peripheral edge portion of the opening 7 of the tank body 2 made of plastic through an insert molding process in which the annular member 8 made of metal is combined with the tank body 2 while the tank body 2 made of plastic is being blow-molded. In the annular member 8 are provided a plurality of bolts 11 (for example, eight of the bolts are provided in the present embodiment), which are substantially evenly spaced around its circumference and each fitted in a hole 8a and held upright, e.g., upwardly protrusive as shown in the drawing. Hereupon, the bolts 11 may be fixed to the annular member 8 by means of press-fitting, welding or screwing.

A description will now be given of the cover-mounting structure of a fuel tank having the above construction in operation. A shown in FIG. 2, the cover 1 is mounted on a portion of the tank body 2 of the fuel tank T where the opening 7 is provided, so as to hermetically close the opening 7. In the tank body 2, the annular member 8 that is larger in diameter than the opening 7 of the tank body 2 and made of metal is mounted integrally by an insert molding process so that it is covered by the tank body 2 made of plastic, and the bolts 11 are fitted in the holes 8a and embedded in the annular member 8. The seal 14 is provided annularly on the top surface of the flange portion 7a of the round opening 7, and the round cover 1 is placed over the opening 7 while the undersurface of the outer edge portion 1a of the round cover 1 comes in contact with a top surface of the seal 14.

Since a predetermined number of bolts 11 are embedded in the annular member 8 that is mounted along the outside wall provided around the opening 7 so that the bolts 11 upwardly protrude respectively from substantially evenly spaced positions, each bolt 11 is fitted in the retainer hole 9a provided in one end portion (outer peripheral portion) of the retainer 9 and the other end portion (inner peripheral portion) of the retainer 9 comes into contact with the outer edge portion 1a provided at an outer edge of the cover 1. Nuts 13 are then screwed on the bolts 11, so that the cover 1 is fixed so as to hermetically close the opening 7.

As described above, the annular member 8 that is insert-molded in the tank body 2 made of plastic is a metal member, and the bolts 11 that are embedded integrally in this annular member 8 made of metal are metal members as well; therefore, the retainer 9 that is a metal member can be fastened with the nuts 13 so that the cover 1 can be fixed and kept in good and close contact with a portion around the opening 7 of the plastic tank body 2.

### [Second Embodiment]

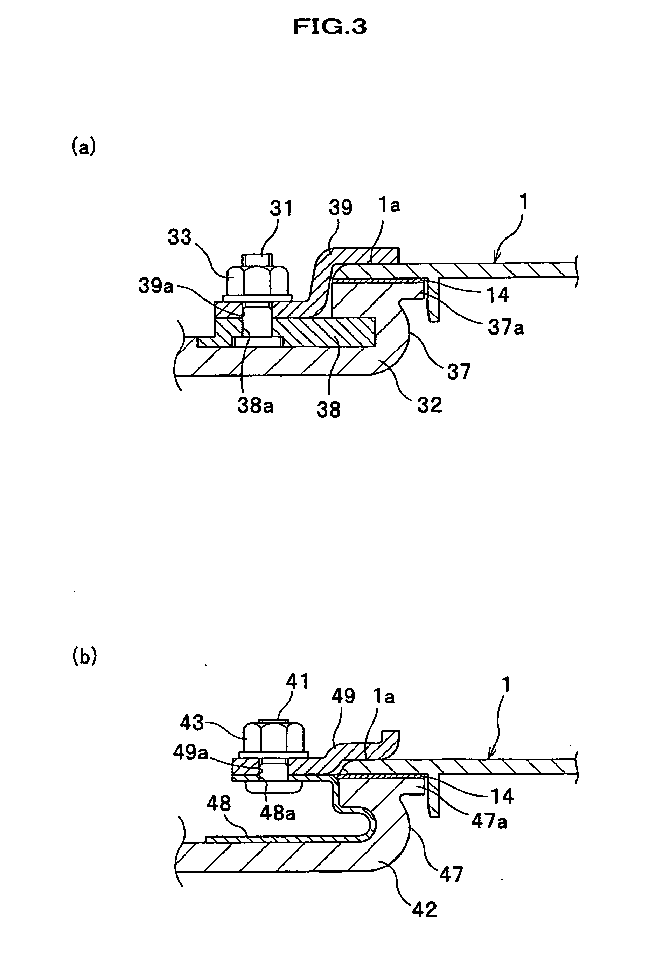

FIG. 3(a) is an enlarged sectional view of a cover-mounting structure of a fuel tank according to a second embodiment. The second embodiment exemplifies a structure in which an annular member 38 with bolts 31 fitted upwardly therein is integrally insert-molded in a tank body 32 made of plastic.

In FIG. 3(a), the same elements as in FIG. 2(b) are designated by the same reference numerals, and a description thereof will be omitted.

As shown in FIG. 3(a), the annular member 38 with the bolts 31 inserted therethrough and projected upwardly therefrom is integrally insert-molded in the tank body 32. The cover-mounting structure according to the second embodiment is different, in that the bolts 31 are fitted in the annular member 38, from the first embodiment in which the bolts 11 are integrally formed in the annular member 8 by welding or the like as shown in FIG. 2.

A description will now be given of the cover-mounting structure of a fuel tank having the above construction in operation. As shown in FIG. 3(a), a cover 1 is attached to a portion of the tank body 32 made of plastic where an opening 37 is provided in such a manner that the cover 1 hermetically closes the opening 37. In the tank body 32, the annular member 38 that is larger in diameter than the opening 37 of the tank body 32 and made of metal is mounted integrally by an insert molding process so that it is covered by the tank body 32 made of plastic. In the annular member 38, in turn, are embedded the bolts 31. A seal 14 is provided annularly on the top surface of a flange portion 37a formed around the round opening 37, and the cover 1 is placed over the opening 37 while the outer edge portion 1a of the round cover 1 comes in contact with the top surface of the seal 14.

Since a predetermined number of bolts 31 are upwardly inserted and fitted in the annular member 38 that is mounted along the outside wall provided around the opening 37, so that the bolts 31 protrude respectively from substantially evenly spaced positions, each bolt 31 is fitted in the retainer hole 39a provided in one end portion (outer peripheral portion) of the retainer 39 and the other end portion (inner peripheral portion) of the retainer 39 comes into contact with the outer edge portion 1a provided at the outer edge of the cover 1. Nuts 33 are then screwed on the bolts 31, so that the cover 1 is fixed so as to hermetically close the opening 37.

As described above, the annular member 38 that is insert-molded in the tank body 32 made of plastic is a metal member, and the bolts 31 that are inserted and fitted in this annular member 38 made of metal are metal members as well; therefore, the retainer 39 that is a metal member can be firmly fastened with the nuts 33 so that the cover 1 can be fixed and kept in good and close contact with a portion around the opening 37 of the plastic tank body 32.

### [Third Embodiment]

FIG. 3(b) is an enlarged sectional view of a cover-mounting structure of a fuel tank according to a third embodiment. The third embodiment exemplifies a structure in which bolts 41 are fitted in an annular member 48 integrally insert-molded in a tank body 42 made of plastic.

In FIG. 3(b), the same elements as in FIG. 2(b) are designated by the same reference numerals, and a description thereof will be omitted.

' As shown in FIG. 3(b), the annular member 48 is integrally insert-molded in the tank body 42 made of plastic. The cover-mounting structure according to the third embodiment is different, in that the fitting of the bolts 41 into the annular member 48 follows the insert molding of the annular member 48 in the tank body 42, from the second embodiment in which the annular member 38 having the bolts 31 fitted therein is insert-molded in the tank body 32.

A description will now be given of the cover-mounting structure of a fuel tank having the above construction in operation.

As shown in FIG. 3(b), a cover 1 is attached to a portion of the tank body 42 made of plastic where an opening 47 is provided in such a manner that the cover 1 hermetically closes the opening 47. In the tank body 42 made of plastic, the annular member 48 that is larger in diameter than the opening 47 of the tank body 42 and made of metal is mounted integrally by an insert molding process so that it is covered by the tank body 42 made of plastic. In the annular member 48, the bolts 41 are fitted upwardly. A seal 14 is provided annularly on the top surface of a flange portion 47a formed around the round opening 47, and the cover 1 is placed over the opening 47 while the outer edge portion 1a of the round cover 1 comes in contact with the top surface of the seal 14.

A predetermined number of the bolts 41 are upwardly inserted and fitted in the annular member 48 that is mounted along the outside wall provided around the opening 47, so that the bolts 41 protrude respectively from substantially evenly spaced positions; each bolt 41 is fitted in the retainer hole 49a provided in one end portion (outer peripheral portion) of the retainer 49 and the other end portion (inner peripheral portion) of the retainer 49 comes into contact with the outer edge portion 1a provided at the outer edge of the cover 1. Nuts 43 are then screwed on the bolts 41, so that the cover 1 is fixed so as to hermetically close the opening 47.

As described above, the annular member 48 that is insert-molded in the tank body 42 made of plastic is a metal member, and the bolts 41 that are inserted and fitted in this annular member 48 made of metal are metal members as well; therefore, the retainer 49 that is a metal member can be firmly fastened up with the nuts 43 so that the cover 1 can be fixed and kept in good and close contact with a portion around the opening 47 of the plastic tank body 42.

### [Fourth Embodiment]

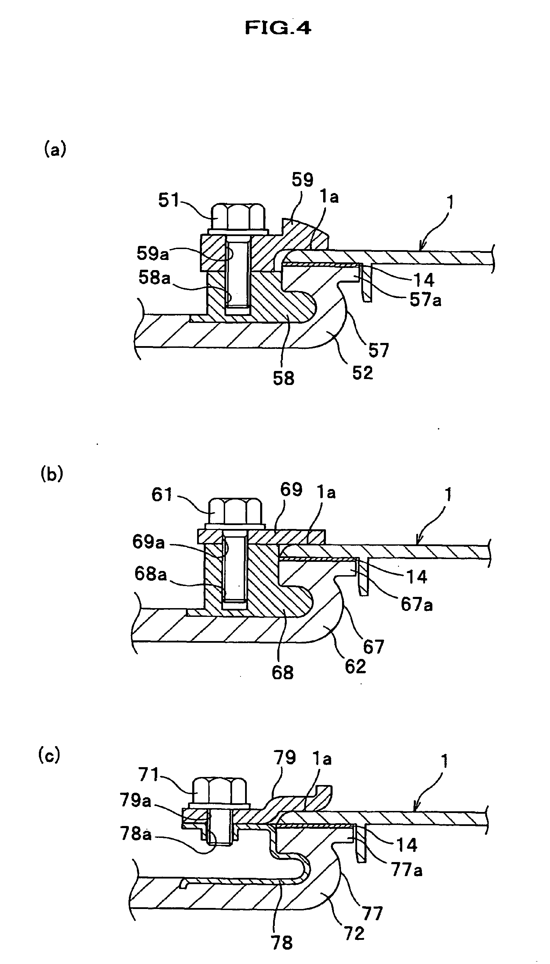

FIG. 4(a) is an enlarged sectional view of a cover-mounting structure of a fuel tank according to a fourth embodiment. The fourth embodiment exemplifies a structure in which an annular member 58 integrally insert-molded in a tank body 52 made of plastic is provided with screw holes 58a.

In FIG. 4(a), the same elements as in FIG. 2(b) are designated by the same reference numerals, and a description thereof will be omitted.

As shown in FIG. 4(a), the annular member 58 having screw holes 58a each provided in an orientation vertical to the annular member 58 is integrally insert-molded in the tank body 52. The cover-mounting structure according to the fourth embodiment is different, in that the screw holes 58a are each provided vertically in the annular member 58, from the first embodiment in which the bolts 11 are integrally formed in the annular member 8 by welding or the like. The screw holes 58a are provided at a plurality of positions (for example, eight of which are provided in the fourth embodiment) in the annular member 58 around its circumference, and are each oriented upwardly as shown in the drawing.

A description will now be directed to the cover-mounting structure of a fuel tank having the above construction in operation. As shown in FIG. 4(a), a cover 1 is attached to a portion of the tank body 52 where an opening 57 is provided in such a manner that the cover 1 hermetically closes the opening 57. In the tank body 52 made of plastic, the annular member 58 that is larger in diameter than the opening 57 of the tank body 52 and made of metal is mounted integrally by an insert molding process so that it is covered by the tank body 52 made of plastic. In the annular member 58, the screw holes 58a are provided. A seal 14 is provided annularly on the top surface of a flange portion 57a formed around the round opening 57, and the cover 1 is placed over the opening 57 while the outer edge portion 1a of the round cover 1 comes in contact with the top surface of the seal 14.

In the annular member 58 that is mounted along the outside wall provided around the opening 7 are provided the screw holes 58a at predetermined positions that are substantially evenly spaced out around the circumference of the annular member 58. Retainer holes 59a provided in one end portion (outer peripheral portion) of a retainer 59 are aligned with these screw holes 58a and the other end portion (inner peripheral portion) of the retainer 59 is brought into contact with the outer edge portion 1a of the cover 1. Thereafter, bolts 51 are screwed into the screw holes 58a, and the cover 1 is thereby fixed so as to hermetically close the opening 57.

As described above, the annular member 58 that is insert-molded in the tank body 52 made of plastic is a metal member, and the screw holes 58a that are provided in the annular member 58 made of metal are metal members as well; therefore, the retainer 59 that is a metal member can be firmly fastened up with the bolts 51 so that the cover 1 can be fixed and kept in good and close contact with a portion around the opening 57 of the plastic tank body 52.

### [Fifth Embodiment]

FIG. 4(b) is an enlarged sectional view of a cover-mounting structure of a fuel tank according to a fifth embodiment. The fifth embodiment exemplifies a structure in which an annular member 68 integrally insert-molded in a tank body 62 made of plastic is provided with screw holes 68a.

In FIG. 4(b), the same elements as in FIG. 2(b) are designated by the same reference numerals, and a description thereof will be omitted.

As shown in FIG. 4(b), the annular member 68 provided with the screw holes 68a is integrally insert-molded in the tank body 62. The cover-mounting structure according to the fifth embodiment represents a variation in which the retainer 59 in the fourth embodiment is modified, and includes a retainer 69 which is a ring-shaped circular plate having an opening in the center thereof. The operation of the cover-mounting structure of a fuel tank having the above construction is understood in a fashion analogous to the fourth embodiment as shown in FIG. 4(a), and thus a duplicate discussion thereof will not be given herein.

### [Sixth embodiment]

FIG. 4(c) is an enlarged sectional view of a cover-mounting structure of a fuel tank according to a sixth embodiment. The sixth embodiment exemplifies a structure in which an annular member 78 integrally insert-molded in a tank body 72 made of plastic is provided with screw holes 78a.

In FIG. 4(c), the same elements as in FIG. 2(b) are designated by the same reference numerals, and a description thereof will be omitted. In FIG. 4(c), the annular member 78 provided with the screw holes 78a is integrally insert-molded in the tank body 72. The cover-mounting structure according to the sixth embodiment is different, in that the screw holes 78a are provided in the annular member 78 and thus bolts 71 are inserted respectively from upward through retainer holes 79a and screwed down into the screw holes 78a, from the third embodiment. The operation of the cover-mounting structure of a fuel tank having the above construction is understood in a fashion analogous to the fourth embodiment as shown in FIG. 4(a), and thus a duplicate discussion thereof will not be given herein.

### [Seventh embodiment]

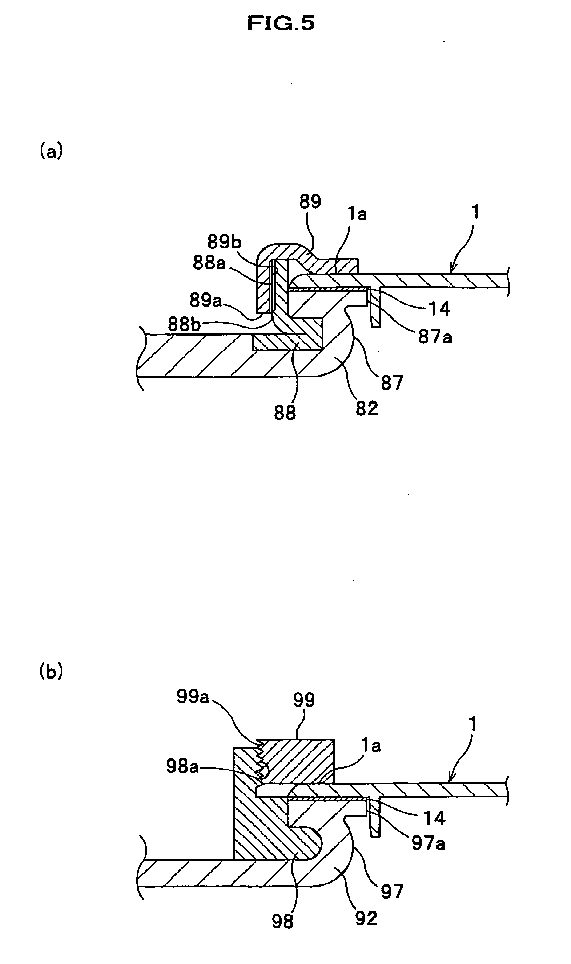

FIG. 5(a) is an enlarged sectional view of a cover-mounting structure of a fuel tank according to a seventh embodiment. The seventh embodiment exemplifies a structure in which an annular member 88 integrally insert-molded in a tank body 82 made of plastic is provided.

In FIG. 5(a), the same elements as in FIG. 2(b) are designated by the same reference numerals, and a description thereof will be omitted.

As shown in FIG. 5(a), the annular member 88 is bent and formed into a substantially inverted T shape, and integrally insert-molded in the tank body 82. In the cover-mounting structure of a fuel tank according to the seventh embodiment, a retainer 89 is screwed on the annular member 88 so that an internal thread 89b provided in a downwardly bent outer cylindrical portion 89a of the retainer 89 engages in an external thread 88a provided in an outer cylindrical surface of a vertical riser portion 88b of the annular member 88.

A description will now be directed to the cover-mounting structure of a fuel tank having the above construction in operation. As shown in FIG. 5(a), a cover 1 is attached to a portion of the tank body 82 where an opening 87 is provided in such a manner that the cover 1 hermetically closes the opening 87. In the tank body 82 made of plastic, the annular member 88 that is larger in diameter than the opening 87 of the tank body 82 and made of metal is mounted integrally by an insert molding process so that it is covered by the tank body 82 made of plastic. A seal 14 is provided annularly on the top surface of a flange portion 87a formed around the round opening 87, and the round cover 1 is placed over the opening 87 while the outer edge portion a of the cover 1 comes in contact with the top surface of the seal 14.

Since the internal thread 89b provided in the downwardly bent outer cylindrical portion 89a of the retainer 89 engages in the external thread 88a provided in the outer cylindrical surface of the vertical riser portion 88b of the annular member 88 that is mounted along the outside wall provided around the opening 87, the cover 1 can be fixed so as to hermetically close the opening 87 by screwing the retainer 89 on.

As described above, the annular member 88 that is insert-molded in the tank body 82 made of plastic is a metal member, and thus the retainer 89 that is a metal member is screwed on, so that the cover 1 can be fixed and kept in good and close contact with a portion around the opening 87 of the plastic tank body 82.

### [Eighth Embodiment]

FIG. 5(b) is an enlarged sectional view of a cover-mounting structure of a fuel tank according to an eighth embodiment. The eighth embodiment exemplifies a structure in which an annular member 98 integrally insert-molded in a tank body 92 made of plastic is provided with an internal thread 98a.

In FIG. 5(b), the same elements as in FIG. 2(b) are designated by the same reference numerals, and a description thereof will be omitted.

As shown in FIG. 5(b), the annular member 98 has the internal thread 98a provided therein and is integrally insert-molded in the tank body 92. In this cover-mounting structure according to the eighth embodiment, the internal thread 98a is provided in the annular member 98, and an external thread 99a is provided in an outer cylindrical surface of an annular nut 99 as a retainer.

A description will now be directed to the cover-mounting structure of a fuel tank having the above construction in operation. As shown in FIG. 5(b), a cover 1 is attached to a portion of the tank body 92 where an opening 97 is provided in such a manner that the cover 1 hermetically closes the opening 97. In the tank body 92 made of plastic, the annular member 98 that is larger in diameter than the opening 97 of the tank body 92 and made of metal is mounted integrally by an insert molding process so that it is covered by the tank body 92 made of plastic. The internal thread 98a is provided in the annular member 98. A seal 14 is provided annularly on the top surface of a flange portion 97a formed around the round opening 97, and the cover 1 is placed over the opening 97 while the outer edge portion 1a of the round cover 1 comes in contact with the top surface of the seal 14.

Since the internal thread 98a is provided in the annular member 98 that is mounted along the outside wall provided around the opening 97, this internal thread 98a engages in the external thread 99a provided in one end portion (outer peripheral portion) of the nut 99. Thereafter, the external thread 99a is engaged with and screwed on the internal thread 98a, and the cover 1 is thereby fixed so as to hermetically close the opening 97.

As described above, the annular member 98 that is insert-molded in the tank body 92 made of plastic is a metal member, and can thus be firmly fastened with the external thread provided in the outer cylindrical surface of the nut 99 that is a metal member. Accordingly, the cover 1 can be fixed and kept in good and close contact with a portion around the opening 97 of the plastic tank body 92. Hereupon, on a top surface of the nut 99, recessed portions are provided, though not illustrated, in at least two positions thereof, and the nut 99 can be fastened by using a predetermined jig.

Although some preferred embodiments have been described above, it is to be appreciated that the present invention is not limited to the above-described embodiments, and modifications may be made as appropriate which fall within the scope of the present invention as defined by the claims. For example, in the aforementioned embodiments, a discussion is extended on the premise that the retainer provided has an annular shape, but the retainer is not necessarily annular, and may have the shape of a solid piece.

### [Ninth Embodiment]

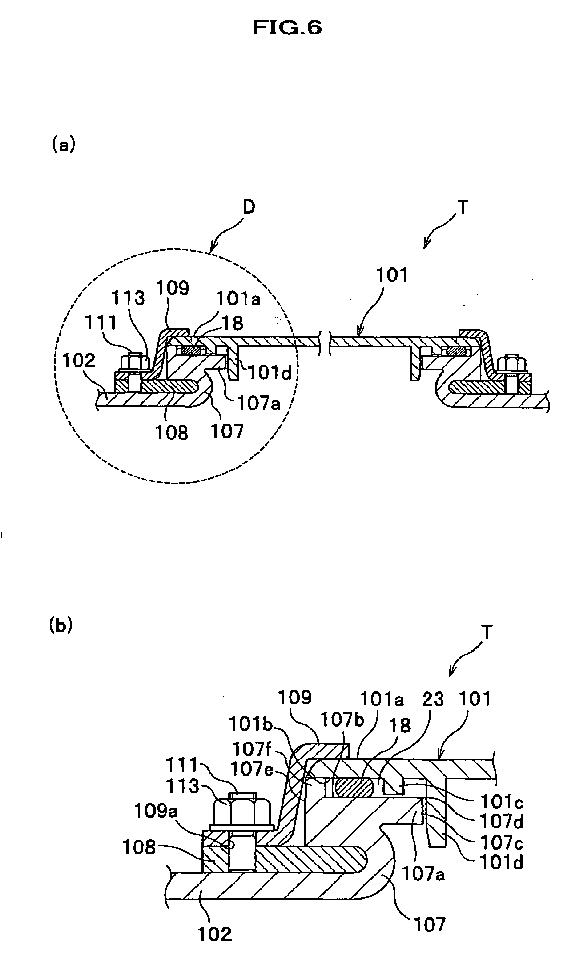

FIG. 6 schematically shows a cover-mounting structure of a fuel tank according to a ninth embodiment of the present invention; FIG. 6(a) is an enlarged sectional view of portion B of FIG. 1, and FIG. 6(b) is an enlarged sectional view of portion D of FIG. 6(a). As shown in FIGs. 6(a) and 6(b), a cover 101 is mounted over an opening 107 provided in a tank body 102 made of plastic. At an edge of the opening 107 provided in the tank body 102 made of plastic is formed a flange portion 107a, and an outer rib 107f is provided annularly, which projects upwardly from an outer edge 107e of a top surface of the flange portion 107a. An inner rib 101c is provided, which projects downwardly from an undersurface of an outer edge portion 101 a of the cover 101 in a radially inside position nearer to the center of the opening 107 than that of the outer rib 107f, toward the top surface 107b of the flange portion 107a. To put it shortly, the outer rib 107f is formed integrally with the flange portion 107a, while the inner rib 101c is formed integrally with the cover 101. The outer rib 107f and the inner rib 101c are arranged in such a manner that a space 23 is defined between the outer rib 107f and the inner rib 101c. In the space 23 defined between the outer rib 107f and the inner rib 101c, a seal 18 that is annular and of circular cross section is provided on the top surface 107b of the flange portion 107a. A guide rib 101d is provided in the outer edge portion 101a of the cover 1 and projects downwardly in a radially inside position nearer to the center of the opening 107 than that of the inner rib 101c. The seal 18 may be of rectangular cross section or otherwise shaped as far as it exerts an appropriate sealing capability.

Around an outside wall provided around the opening 107, an annular member 108 that is larger in diameter than this opening 107 and made of metal is provided. A separate retainer 109 made of metal is provided in such a manner that one end portion (outer peripheral portion) of the retainer 109 is in contact with the annular member 108 while the other end portion (inner peripheral portion) of the retainer 109 is in contact with an outer edge portion 101a of the cover 101 that closes the opening 107. The retainer 109 is fastened with a plurality of bolts 111 and nuts 113, and the cover 101 is thereby fastened over the opening 107. In the present embodiment, eight pairs of bolts 111 and nuts 113 are employed to fasten the retainer 109.

A description will now be directed to the cover-mounting structure of a fuel tank having the above construction in operation. As shown in FIG. 6(b), the flange portion 107a is formed at the edge of the opening 107 provided in the tank body 102 made of plastic; the outer rib 107f projects upwardly from the outer edge 107e of the top surface 107b of the flange portion 107a; and the inner rib 101c projects downwardly from the undersurface of the outer edge portion 101a of the cover 101 toward the top surface 107b of the flange portion 107a. Since the outer rib 107f and the inner rib 101c are disposed so that the space 23 is defined between the outer rib 107f and the inner rib 101c as described above, the space 23 is provided between the outer rib 107f and the inner rib 101c and the seal 18 that is annular and of circular cross section may be provided in the space 23. Specifically, the seal 18 is fitted under a tension on an outer cylindrical surface of the inner rib 101c, and thereafter the cover 101 is placed over the opening 107. On the other hand, the seal 18 may be placed on the top surface 107b of the flange portion 107a before the cover 101 is placed thereon over the opening 107. In the event, the outer rib 107f is brought into contact with the undersurface 101b of the outer edge portion 101a of the cover 101, and thus a leak that would occur between the opening 107 and the cover 101 can be prevented. When the cover 101 is attached to close the opening 107, the guide rib 101d serves as a positioning guide. Accordingly, the cover 101 can be mounted on the portion of the tank body 102 of the fuel tank T where the opening 107 is provided in such a manner as to hermetically close the opening 107.

As the cover 101 is placed and brought into contact with the outer rib 107f provided on the outer edge 107e of the flange portion 107a formed at an edge of the opening 107 of the tank body 102, the bolts 111 are fitted into retainer holes 109a provided in the one end portion (outer peripheral portion) of the retainer 109 and the other end portion (inner peripheral portion) of the retainer 109 comes into contact with the outer edge portion 101a of the cover 101. Thereafter, the nuts 113 are screwed on and the retainer can be fixed firmly onto the tank body 102 with the cover 101 closed hermetically.

The annular member 108 that is insert-molded in the tank body 102 made of plastic is a metal member, and the bolts 111 that are embedded integrally in this annular member 108 made of metal are metal members as well; therefore, the retainer 109 that is a metal member can be fastened up with the nuts 113. Accordingly, the cover 101 can be fixed and kept in good and close contact with a portion around the opening 107 of the plastic tank body 102.

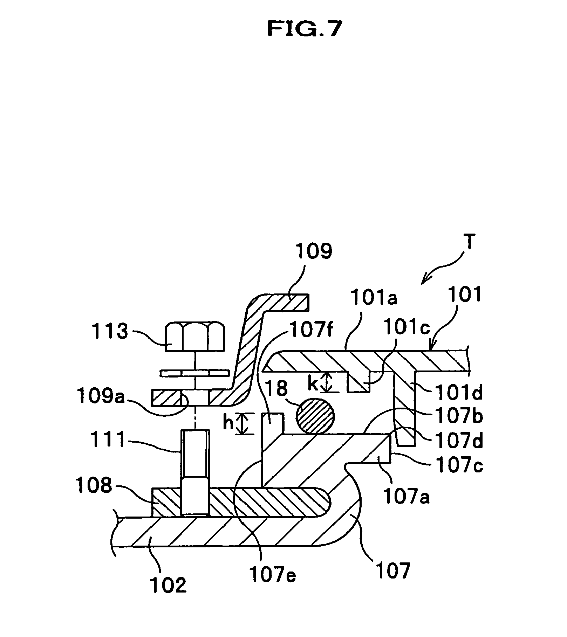

Next, a description will be given of relative positioning of the outer rib 107f, the inner rib 101c and the seal 18 that are arranged so as to achieve the good and close contact. FIG. 7 is an enlarged and exploded sectional view for explaining the relative positioning of the opening 107 and the cover 101 included in the ninth embodiment. As shown in FIG. 7, the seal 18 that is annular and of circular cross section is placed on the top surface 107b of the flange portion 107a of the opening 107. The seal 18 is disposed between the outer rib 107f and the inner rib 101c, and these ribs 107f and 101c are so designed that the height h of the outer rib 107f is greater than the height k of the inner rib 101c (h>k). As a result, when the cover 101 is placed on the top surface 107b of the flange portion 107a of the opening 107, the outer rib 107f comes into contact with the undersurface of the outer edge portion 101a of the cover 101. In that event, since the height k of the inner rib 101c is somewhat shorter than the height h of the outer rib 107f, the inner rib 101 c and the top surface 107b of the flange portion 107a are disposed with a little clearance left therebetween, or are configured to lightly touch. As shown in FIG. 6(b), when the outer rib 107f comes into contact with the undersurface 101b of the outer edge portion 101a of the cover 101, the seal 18 that is circular in cross section is pressed by the undersurface 101b of the outer edge portion 101a of the cover 101, and becomes deformed so as to conform to the shape of the space 23 defined between the outer rib 107f and the inner rib 101c, so that a good hermetical sealing performance can be achieved.

### [Tenth Embodiment]

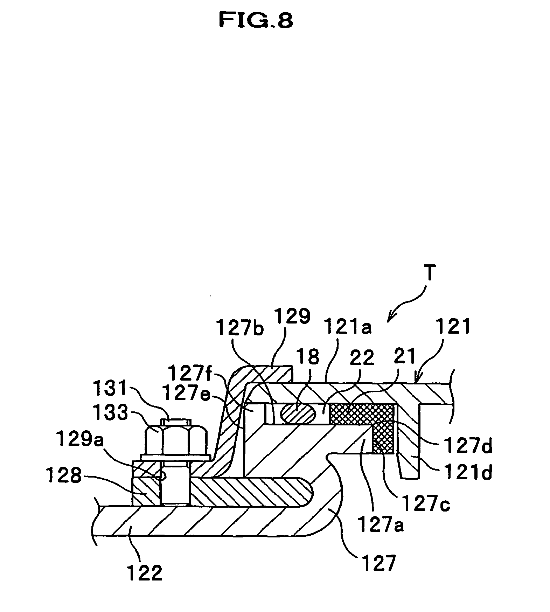

FIG. 8 is an enlarged sectional view of a modified example of the arrangement shown in FIG. 6 (b). The tenth embodiment exemplifies a structure in which a soft resin having a fuel barrier property against HDPE (high-density polyethylene) with solubility parameter of 11 or greater, or a soft EVOH (alcohol copolymer) is employed as a material for a seal guide.

In FIG. 8, the same elements as in FIG. 6(b) are designated by the same reference numerals, and a description thereof will be omitted.

As shown in FIG. 8, a cover 121 is mounted over an opening 127 provided in a tank body 122 made of plastic. At an edge of the opening 127 provided in the tank body 122 made of plastic is formed a flange portion 127a, and an outer rib 127f is provided which projects upwardly from an outer edge 127e of a top surface 127b of the flange portion 127a. A seal guide 21 that is an annular member shaped like a letter L in cross section so as to conform to the shape of a corner at an inner edge 127c of the top surface 127b of the flange portion 127a is fitted on the inner edge 127c of the flange portion 127a. A space 22 is defined between the outer rib 127f and the seal guide 21. In the space 22, a seal 18 is provided.

A description will now be directed to the cover-mounting structure of a fuel tank having the above construction in operation. A shown in FIG. 8, the tenth embodiment of the cover-mounting structure is an exemplary embodiment resulting from modification of the cover 101 and inner rib 101c of the ninth embodiment. An undersurface of an outer edge portion 121a of the cover 121 is configured to press the seal guide 21 directly. Hereupon, the space 22 is defined between the outer rib 127f and the seal guide 21, and the seal 18 can be provided in the space 22, so that the cover 121 can be brought into secure and close contact with a portion around the opening 127, thereby achieving a good hermetical sealing performance. Accordingly, the opening 127 can be hermetically closed by the cover 121. On the other hand, the guide rib 121d serves as a positioning guide when the cover 121 is mounted over the opening 127. As described above, while pressing the seal guide 21, the cover 121 comes in contact with the outer rib 127f at the same time, and thus the cover 121 can hermetically close the opening 127. Moreover, the seal guide 21 is formed of a soft resin having a fuel barrier property against HDPE (high-density polyethylene) with solubility parameter of 11 or greater, or of a soft EVOH (alcohol copolymer), and thus has an excellent layer structure, so that a good and close contact can be achieved. Further, the seal guide 21 thus has an excellent flexibility and an excellent barrier property, so that a good hermetical sealing performance and an inhibitive effect of preventing HC (hydrocarbon) from being transmitted can be achieved as a sub-seal.

Although some preferred embodiments have been described above, it is to be understood that the present invention is not limited to the above-described embodiments, and modifications may be made as appropriate which fall within the scope of the present invention. For example, in the aforementioned embodiments, the outer rib is disposed in a radially outside position with respect to the inner rib, but the relative positioning may be configured vice versa.

### [Eleventh Embodiment]

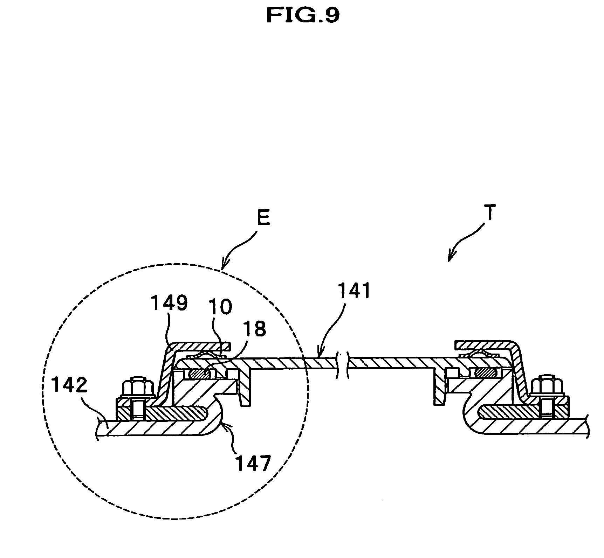

FIG. 9 is an enlarged sectional view of a portion corresponding to portion B of FIG. 1. As shown in FIG. 9, a discal cover 141 is attached over a round opening 147 provided in a tank body 142 and fastened with a retainer 149. A metal ring 10 is annularly provided between an undersurface of the retainer 149 and a top surface of an outer edge portion of the cover 141, and a seal 18 is annularly provided between an undersurface of the outer edge portion of the cover 141 and a top surface of a portion around the opening 147 so as to hermetically seal an interstice that could develop between the cover 141 and the opening 147.

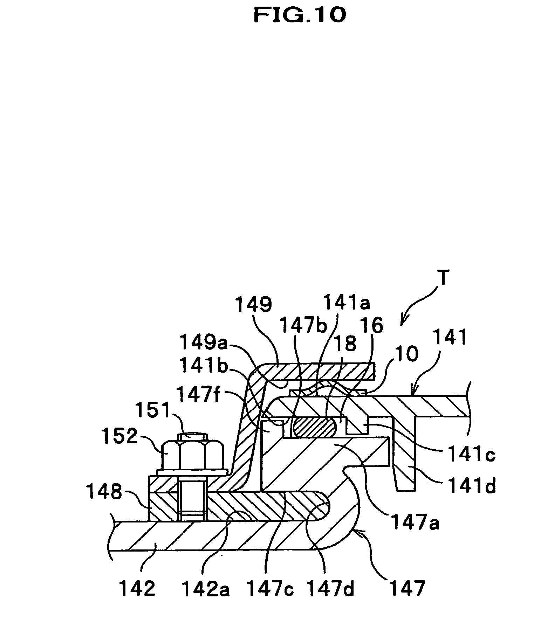

A description will be given more in detail with reference to FIG. 10. FIG. 10 is a partial sectional view showing portion E of FIG. 9 and illustrates a cover-mounting structure of a fuel tank T. As shown in FIG. 10, the cover-mounting structure of a fuel tank T is constructed in such a manner that the cover 141 in which pump fittings (not shown) are mounted is attached over the opening 147 of the tank body 142 with the cover 141 being pressed by the retainer 149 to hermetically close the opening 147. The seal (O-ring) 18 is put between a top surface 147b of a portion around the opening 147 and an undersurface 141b of the outer edge portion of the cover 141. Right (along a vertical axis) above the position in which the seal 18 is placed, the metal ring 10 is provided between a top surface 141a of the outer edge portion of the cover 141 and an undersurface (pressing surface) 149a of an inner edge portion of the retainer 149. The metal ring 10 has a spring tension exerting a force in such a direction that a portion of the fuel tank T where the opening 147 is provided is pressed by the cover 141.

To this end, a flange portion 147a is formed at an edge of the opening 147 provided in the tank body 142, and the seal 18 is provided annularly on a top surface 147b of the flange portion 147a, so that an interstice that could develop between the opening 147 and the cover 141 is hermetically sealed. Around the opening 147, an annular member 148 that is larger in diameter than the opening 147 and made of metal is provided. The annular member 148 is formed integrally with the tank body 142, and embedded therein by an undersurface 147c of the flange portion 147a, a recessed outside wall 147d provided around the opening 147, and a tank outside wall 142a. Accordingly, the annular member 148 is fixed, integrally with the tank body 142, around a peripheral edge of the opening 147 of the tank body 142. Bolts 151 are then screwed in the annular member 148, and the retainer 149 is fitted so as to have the bolts 151 inserted therein, and further the retainer 149 is fastened down by screwing nuts 152 from above on the bolts 151. Consequently, the retainer 149 is fixed on the annular member 148.

A guide rib 141d is provided on an undersurface of the discal cover 141 annularly so as to fit on an inner periphery defining the opening 147, and an outer cylindrical surface of a lower end portion of the guide rib 141d is chamfered to facilitate fitting. This guide rib 141d serves to position the cover 141 so that the cover 141 may not shift with respect to the opening 147. The undersurface 141b of the outer edge portion 141a of the cover 141 floats over an outer rib 147f formed at an outer edge of the flange portion 147a, due to support of the seal 18. Therefore, the outer rib 147f is provided annularly with a little clearance left from the undersurface 141b of the outer edge portion 141 a of the cover 141. On an undersurface of the round cover 141 in a radially inside position nearer to the center thereof than that of the outer rib 147f, an inner rib 141c is provided with a clearance left from the top surface 147b of the flange portion 147a, or so disposed as to lightly touch the top surface 147b of the flange portion 147a. Thus, a space 16 is defined between the outer rib 147f and the inner rib 141c, and the seal 18 is placed annularly in the space 16. Further, along a vertical axis above the seal location on the top surface 147b of the flange portion 147a, the metal ring 10 is placed on the top surface 141 a of the outer edge portion of the cover 141 and pressed down by the retainer 149.

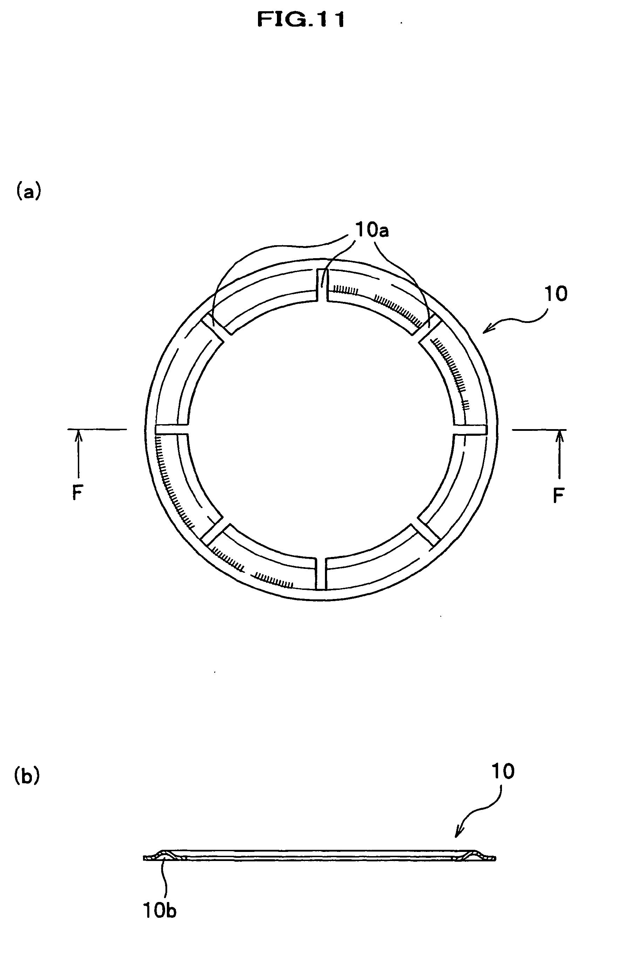

Next, a description of the aforementioned metal ring 10 will be given below. FIG. 11 schematically shows the metal ring 10; FIG. 11(a) is a plan view, and FIG. 11(b) is a vertical sectional view taken along line F-F of FIG. 11(a). The metal ring 10 results from stamping of spring steel followed by heat treatment to form an annular metal disc on an undersurface of which is provided a recess (groove) 10b along a peripheral edge portion by drawing or the like. In the metal ring 10, slits 10a, 10a, ..., of which eight may be provided for example, are cut in radial directions at an inner circumference of its circular shape.

A description will now be directed to the cover-mounting structure of a fuel tank T having the above construction in operation. As shown in FIG. 10, when the retainer 149 is fastened to the annular member 148 with the bolts 151 and the nuts 152, a downward load is applied to the top surface of the metal ring 10 that is placed on the top surface 141a of the outer edge portion of the cover 141 by the undersurface 149a of the inner edge portion of the retainer 149. Thus, the undersurface 149a of the inner edge portion of the retainer 149 presses the metal ring 10, and the cover 141 disposed under the metal ring 10 is thereby pressed by the metal ring 10. Meanwhile, the seal 18 is placed between the cover 141 and the portion around the opening 147, and therefore, the opening 147 is hermetically closed by the cover 141.

On the other hand, the portion in the tank body 142 where the opening 147 is provided and the cover 141 are formed of plastic, and may therefore deform over time and could become unable to maintain its initially achieved accurate positioning and adequate strength between joined portions of the tank body 142 where the opening 147 is provided and the cover 141. Nevertheless, the metal ring 10 put between the retainer 149 and the cover 141 makes up for the change caused by the time-varying plastic materials in positioning and strength between the joined portions of the cover 141 and the tank body 142 where the opening 147 is provided, with the help of spring tension of the metal ring 10, and can thereby maintain a predetermined level of positioning accuracy and adequate strength between the joined portions thereof. The deformation over time as described above is called "creep" strain, referring to the phenomenon in which plastic deformation progresses gradually with the lapse of time due to the application of sustained stress. To address this phenomenon, the spring tension of the metal ring 10 presses the cover 141 supported by the seal 18 in a floating manner. Even after the top surface 147b of the flange portion 147a or the undersurface 141b of the outer edge portion 141a of the cover 141 becomes so deformed as to assume a hollowed surface shape as a result of the creep strain, such a shape resulting from the creep strain may be conformed to so that the amount of compression of the seal (O-ring) 18 may be preserved, which makes it possible to inhibit the decrease of reaction force of the seal packing, and to thereby inhibit the decrease of hermetical sealing performance between the cover 141 and the tank body 142. The metal ring 10 that may operate as described above will come up for further discussion in detail.

As shown in FIG. 10, the retainer 149 is fastened to the annular member 148, so that the top surface of the metal ring 10 is pressed by the undersurface 149a of the inner edge portion of the retainer 149. Hereupon, the metal ring 10, in which the slits 10a, 10a, ... are made as shown in FIG. 11, are provided for example with eight slits 10a, 10a, ... arranged in evenly spaced positions, which deforms the metal ring 10 in a manner that forces the recess (groove) 10b to widen. In other words, during the time when the metal ring 10 deforms in a manner that forces the groove (recess) 10b to widen, the inner edge of the metal ring 10 expands inwardly, and those slits 10a, 10a, ... serve to absorb measurable strains that would be caused all that while. To be more specific, the slits 10a, 10a, ... each function as a groove for absorbing measurable strains that would be induced when the metal ring 10 is caused to exhibit a spring tension. This allows the metal ring 10 to exert its spring tension.

As shown in FIG. 10, the metal ring 10 is provided on the top surface 141a of the outer edge portion of the cover 141 right above the position (along a vertical axis) in which the seal is placed on the top surface 147b of the flange portion 147a, and is pressed by the undersurface (hereinafter referred to as pressing surface) 149a of the inner edge portion of the retainer 149. In this state, the pressing surface 149a of the retainer 149, the metal ring 10, the top surface 141a of the outer edge portion of the cover 141, the seal 18, and the position in which the seal 18 is placed on the flange portion 147a are arranged along one and the same axis, which allows the cover 141 to be firmly clamped between the retainer 149 and the tank body 142, so that the cover 141 can be firmly fixed over the opening 147.

### [Twelfth Embodiment]

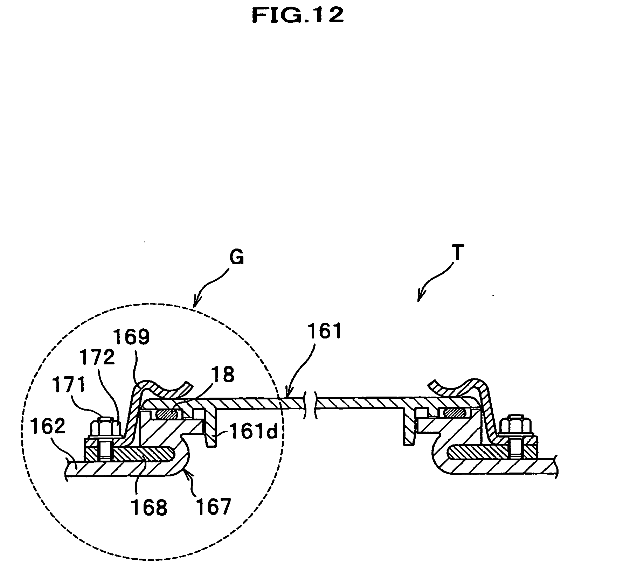

The following discussion will be directed to a twelfth embodiment. The twelfth embodiment is different from the eleventh embodiment in that the twelfth embodiment has no metal ring 10, and that a retainer 169 that will be described later *(see* FIG. 12) has its own spring tension.

In describing the twelfth embodiment, the same elements as in the eleventh embodiment are designated by the same reference numerals, and a description thereof will be omitted.

FIG. 12 is an enlarged sectional view showing a portion corresponding to portion B of FIG. 1. As shown in FIG. 12, a discal cover 161 is attached over a round opening 167 provided in a tank body 162 and fastened with a retainer 169. The retainer 169 is formed to have a corrugated portion extending on a top surface of an outer edge portion of the cover 161, to press the cover 161 with its spring tension, and is in contact with the top surface of the cover 161 under pressure. A seal 18 is annularly provided between a top surface of a portion around the opening 167 and the cover 161 and so as to hermetically seal an interstice that could develop between the opening 167 and the cover 161.

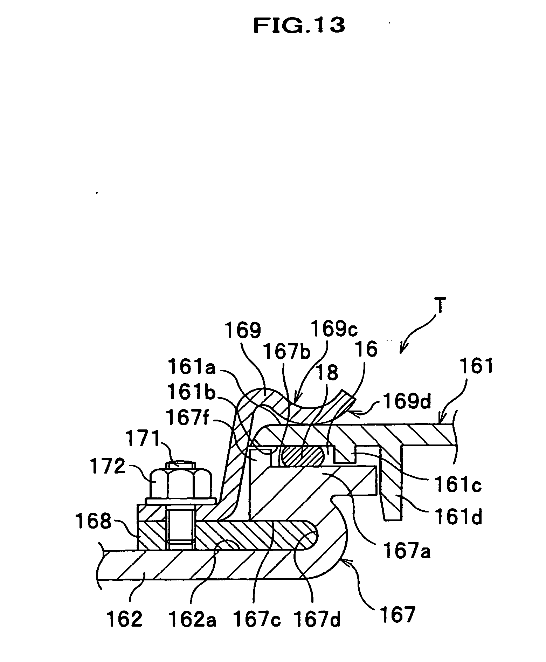

A description will be given more in detail with reference to FIG. 13. FIG. 13 is a partial sectional view showing portion G of FIG. 12 and illustrates a cover-mounting structure of a fuel tank T. As shown in FIG. 13, the cover-mounting structure of a fuel tank T is constructed in such a manner that the cover 161 in which pump fittings (not shown) are mounted is attached over the opening 167 of the tank body 162 made of plastic with the cover 1 being pressed by the retainer 169 to hermetically close the opening 167. The seal 18 is put between a top surface 167b of the portion around the opening 167 and an undersurface 161b of the outer edge portion of the cover 161.

To this end, a flange portion 167a is formed at an edge of the opening 167 provided in the tank body 162, and the seal 18 is provided annularly on a top surface 167b of the flange portion 167a, so that an interstice that could develop between the opening 167 and the cover 161 is hermetically sealed. Around the opening 167, an annular member 168 made of metal is provided in such a manner as described in relation to the eleventh embodiment. Bolts 171 are screwed in this annular member 168, and the retainer 169 is fitted so as to have the bolts 171 inserted therein, and further the retainer 169 is fastened down by screwing nuts 172 from above on the bolts 171. Consequently, the retainer 169 is fixed on the annular member 168.

Under the discal cover 161, an outer rib 167f, an inner rib 161c, and a guide rib 161d are provided to define a space 16, and the seal 18 is provided in the space 16, in such a manner as described in relation to the eleventh embodiment.

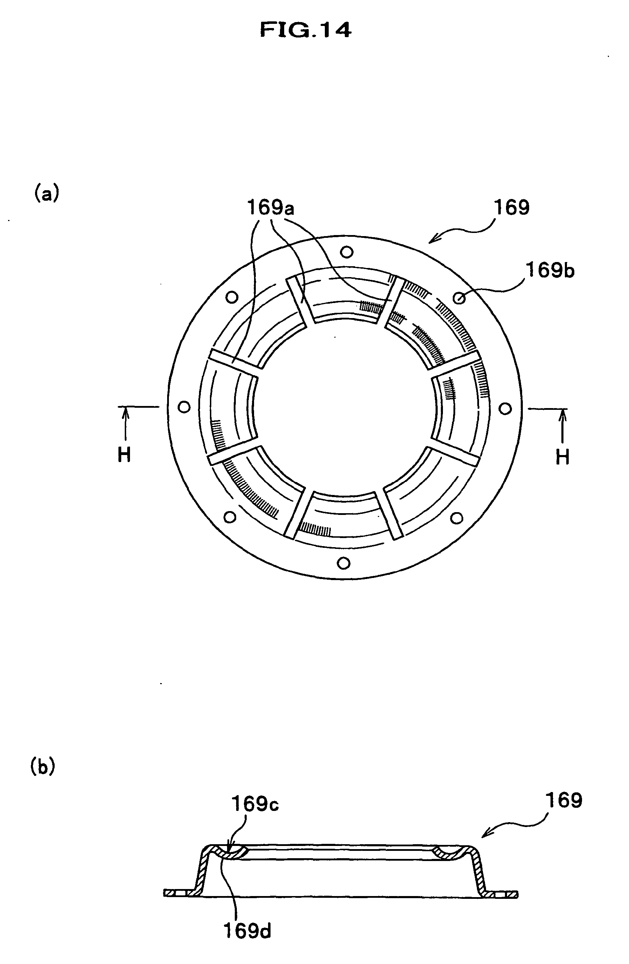

Next, a description of the aforementioned retainer 169 will be given more in detail below. FIG. 14 is a schematic illustration of the retainer 169; FIG. 14(a) is a plan view, and FIG. 14(b) is a vertical sectional view taken along line H-H of FIG. 14(a). The retainer 169 is an annular metal disc resulting from stamping of spring steel followed by heat treatment, and is formed annularly so as to surround the cover 161. In the retainer 169, slits 179a, 179a, ... of which eight may be provided for example, are cut in radial directions at an inner circumference of its circular shape. An inner edge portion of the retainer 169 has a corrugated portion 169c formed along a peripheral edge thereof by drawing or the like. Reference numeral 169b denotes a round hole. In the round holes 169b are inserted the bolts 171 *(see* FIG. 13), on which the nuts *(see* FIG. 13) are in turn screwed down; thus, the retainer 169 is fixed on the annular member 168.

A description will now be directed to the cover-mounting structure of a fuel tank T having the above construction in operation. As shown in FIG. 13, when the retainer 169 is fastened to the annular member 168 with the bolts 171 and the nuts 172, an undersurface 169d of the inner edge portion of the retainer 169 presses the cover 161. Meanwhile, the seal 18 is placed between the cover 161 and the portion around the opening 167, and therefore, the opening 167 is hermetically closed by the cover 161.

On the other hand, the portion in the tank body 162 where the opening 167 is provided and the cover 161 are formed of plastic, and may therefore deform over time and could become unable to maintain its initially achieved accurate positioning and adequate strength between joined portions of the tank body 162 where the opening 167 is provided and the cover 161. Nevertheless, the spring tension of the retainer 169 serves to make up for the change caused by the time-varying plastic materials in positioning and strength between the joined portions of the cover 161 and the tank body 162 where the opening 167 is provided, and can thereby maintain a predetermined level of the positioning accuracy and adequate strength between the joined portions thereof. The spring tension of the retainer 169 makes it possible to conform to the deformed shape as a result of the creep strain of flange portion 167a and the outer edge portion of the cover 161, thereby inhibiting the hermetical sealing performance from lowering, as in the first embodiment. The retainer 169 that may operate as described above will come up for further discussion in detail.

The retainer 169, in which the slits 169a, 169a, ... are made as shown in FIG. 14, is fastened to the annular member 168, so that a top surface 161a (see FIG. 13) of the outer edge portion of the cover 161 is pressed by the undersurface 169d of the inner edge portion of the retainer 169. Hereupon, the retainer 169 are provided for example with the slits 169a, 169a, ... arranged in eight positions, which deforms the retainer 169 in a manner that forces the corrugated portion 169c of the retainer 169 to widen. In other words, during the time when the retainer 169 deforms in a manner that forces the corrugated portion 169c of the retainer 169 to widen, the inner edge of the retainer 169 expands inwardly, and those slits 169a, 169a, ... serve to absorb measurable strains that would be caused all that while. To be more specific, the slits 169a, 169a, ... each function as a groove for absorbing measurable strains that would be induced when the retainer 169 is caused to exhibit a spring tension. This allows the retainer 169 to exert its spring tension.

As shown in FIG. 13, the undersurface (pressing surface) 169d of the inner edge portion of the retainer 169 comes in contact with the top surface 161a of the outer edge portion of the cover 161 right above the position (along a vertical axis) in which the seal 18 is placed on the top surface 167b of the flange portion 167a, and presses the top surface 161a of the outer edge portion of the cover 161. In this state, the pressing surface 169d of the retainer 169, the top surface 161a of the outer edge portion of the cover 161, the seal 18, and the position in which the seal 18 is placed on the flange portion167a are arranged along one and the same axis, which allows the cover 161 to be firmly clamped between the retainer 169 and the tank body 162, so that the cover 161 can be firmly fixed over the opening 167.

The fuel pump 6 (*see* FIG. 1) is integrally mounted in the cover 161, so that no clearance remains between the pump fittings and the cover; therefore, the hermetical sealing performance between the cover (mount plate) 161 and the tank body 162 can be improved.

Since the cover 161 is mounted on the tank body 162 using a metal fastening means (retainer 169) to which a spring tension is applied, even when a joint portion between the fuel pump 6 and the tank body 162 has deformed over time, the seal 18 is invariably brought into close contact with the surface where the seal is placed under an adequate pressure, so that a predetermined sealing performance can be achieved.

Since a spring tension is applied to the entire perimeter of the metal fastening means (retainer 169), any partial decrease in sealing performance thereof can be avoided.

Moreover, since the spring elasticity, of the retainer itself or of a separate member such as a metal ring 10, is caused to reside in a joint portion to address the problem of decreasing reaction force of seal packing due to the creep strain, its springlike portion conforms to the crept portion and the initially given reaction force of the seal packing can be preserved even after creeping has progressed, so that the decrease in hermetical sealing performance of the tank body 162 incorporating the fuel pump 6 can be prevented.

Although preferred embodiments have been described above, the present invention is not limited to the above-described embodiments, and modifications may be made as appropriate which fall within the scope of the present invention

For example, the aforementioned embodiments provides eight slits arranged annularly in the metal ring or retainer in order to enable the metal ring or retainer to exhibit a spring tension, but these slits may be cut either in radial directions at an inner circumference of its circular shape or in radial directions at an outer circumference of its circular shape. Further, the number of the slits may not be limited to eight.

### [Thirteenth Embodiment]

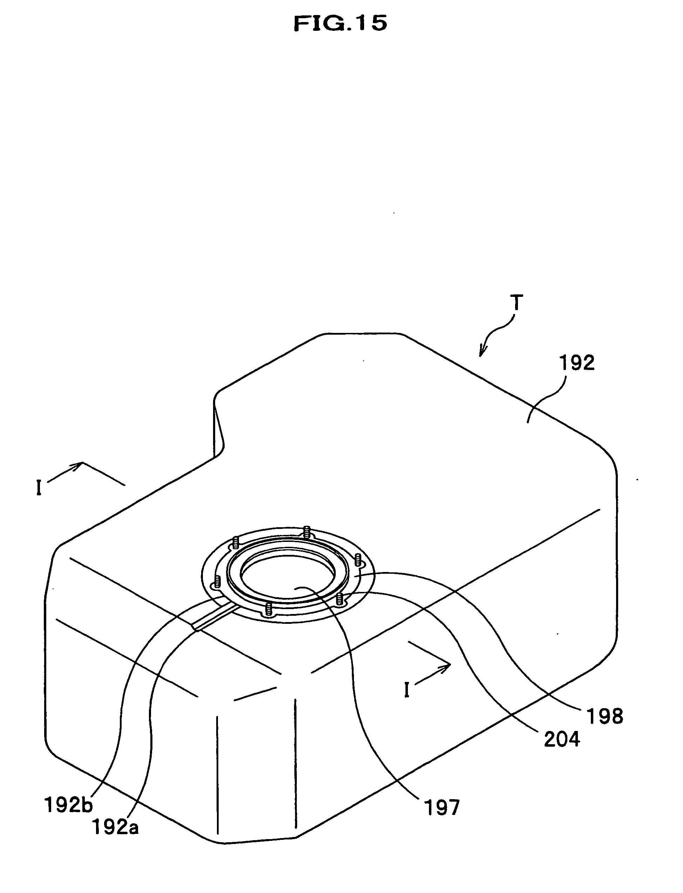

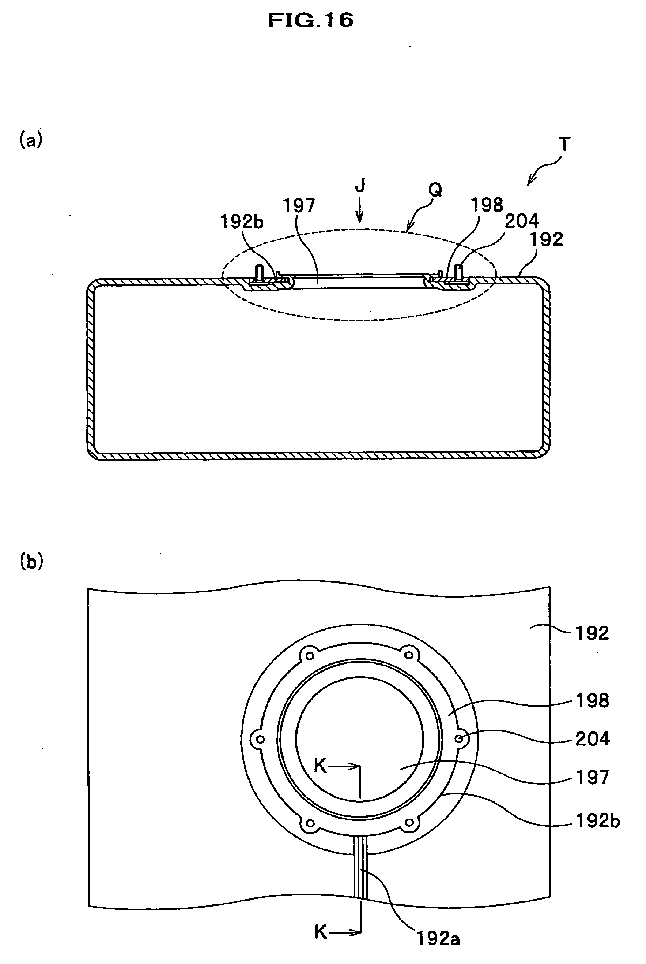

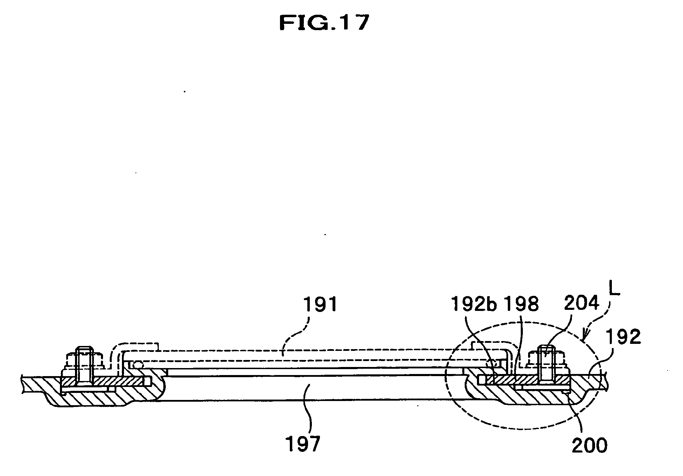

FIG. 15 is a perspective view schematically showing a fuel tank (plastic container) according to a thirteenth embodiment. FIG. 16(a) is a vertical sectional view taken along line I-I of FIG. 15; and FIG. 16(b) an illustration of portion Q of FIG. 16(a) as viewed from arrow J. FIG. 17 is an enlarged sectional view of portion Q of FIG. 16(a).

The terms fuel tank and tank body used in describing the present embodiment refer respectively to plastic container and plastic container body defined in the claims. A cover will hereinafter be referred to as cover-like member.

As shown in FIGs. 15 through 17, a fuel tank T is comprised of a tank body 192 made of plastic, at least part of which is made of a barrier material, with an opening 197 provided in the tank body 192. Mounted over the opening 197 is a cover-like member 192 *(see* FIG. 17) composed of a pump module and other components. In an external surface of the tank body 192 is provided a recess (groove) 192b which extends circularly around a peripheral edge portion of the opening 197, and an annular member 198 is insert-molded in the recess 192b during a plastic molding process. The annular member 198 is so shaped as to be kept from obstructing the thermal contraction of the tank body 192 made of plastic when the tank body 192 is contracted by heat, or shaped like a flat plate having no irregularity on its surfaces. Moreover, the annular member 198 is provided with a plurality of bolts 204 protruding from annularly arranged positions along a peripheral edge of the opening 197. Reference character 192a denotes a drainage passage. The drainage passage 192a is provided in the external surface of the tank body 192. Provision of the drainage passage 192a as described above forms a structure in which the drainage passage 192a is configured to connect interfaces between the annular recess 192b and bottom surface(s) of at least one of the annular member 198 and the bolts 204, and to connect spaces around the above interfaces, thereby allowing water to drain to the outside to prevent the formation of rust. Here, as illustrated, a single drainage passage 192 is provided in the external surface of the tank body 192; it is however understood that the number of passages may be increased as appropriate.

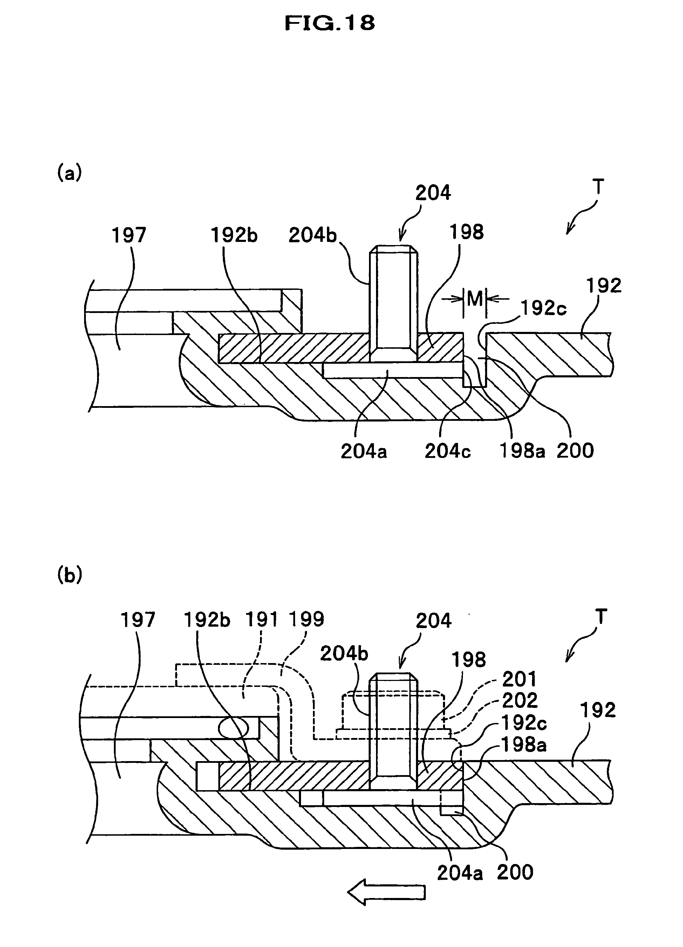

FIG. 18 represents enlarged sectional views showing portion L of FIG. 17; FIG. 18(a) is a sectional view of a portion around the opening 197 immediately after plastic molding; and FIG. 18(b) is a sectional view of the portion around the opening 197 which has completely been thermally contracted after plastic molding. As shown in FIG. 18(b), a cover-like member 191, which is illustrated by a broken line, is mounted over the opening 197 of a fuel tank T, and this cover-like member 191 is fastened to a tank body 192 using a retainer 199, a nut 202 and other elements. This allows the tank body 192 to be hermetically closed. The tank body 192 is provided with a recess 192b provided annularly around a peripheral edge of the opening 197 with an annular member 198 made of metal being embedded integrally in the recess 192b. Reference character 200 denotes a space, and the space 200 is provided between an outer inside wall 192c of the recess 192b provided annularly around the opening 197 and at least one of an outer cylindrical end face 198a of the annular member 198 *(see* FIG. 18(a)) and an outer cylindrical end faces 204c of heads 204a of bolts 204 (*see* FIG. 18(a)), serving as an allowance M for thermal contraction of plastic material. Therefore, the space 200 appears in the tank body 192 immediately after plastic molding, but disappears when the thermal contraction has been completed after plastic molding as shown in FIG. 18(b). At this stage, the space 200 is occupied by the annular member 198 abutted against the outer inside wall 192c of the recess 192 with no space left in actuality. The bolts 204 are provided with their screw thread portions 204b oriented upward.

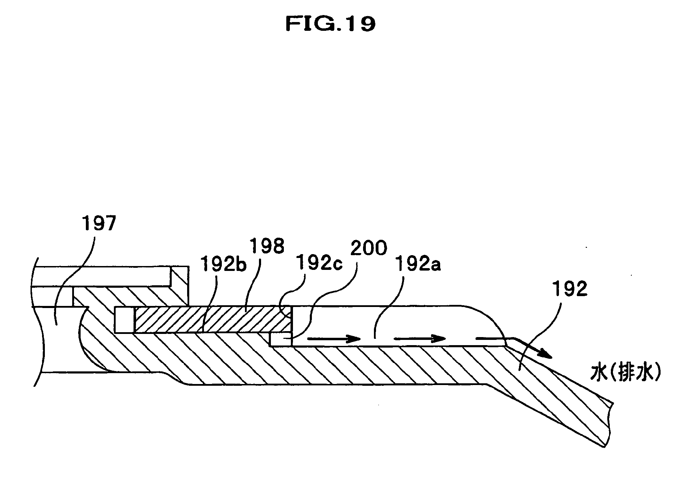

FIG. 19 is a sectional view taken along line K-K of FIG. 16(b), and illustrates a section of the drainage passage 192a. The drainage passage 192a is led out from a bottom surface of the space 200 formed in the tank body 192 immediately after plastic molding, to an external surface of the tank body 192. The drainage passage 192a is provided to drain water that tends to stay in or around interfaces between the recess 192b and the bottom surfaces of the annular member 198 and bolts 204 *(see* FIGs. 16 and 18). For that purpose, the bottom surface of the space 200 formed adjacent to the annular recess 192b immediately after plastic molding is in a position lower than the bottom surfaces of the annular member 198 and the bolts 204. In this instance, the cross-sectional geometry of the recess 192b is not limited to any particular shape as long as it allows water to drain out.

A description will now be directed to the cover-mounting structure of a fuel tank (plastic container) having the above construction in operation. Referring to FIGs. 18(a) and 18(b), the section of a portion around the opening 197 of the tank body 192 immediately after plastic molding (FIG. 18(a)) and the section of a portion around the opening 197 of the tank body 192 which has completely been thermally contracted after plastic molding (FIG. 18(b)) are explained hereinafter in a contrastive manner. As shown in FIG. 18(a), the outer inside wall 192c of the recess immediately after plastic molding has the space 200, as an allowance M for thermal contraction of plastic material of the tank body 192 that will be thermally contracted immediately after plastic molding, formed between the outer inside wall 192c and at least one of the outer cylindrical end face 198a of the annular member 198 and the outer cylindrical end faces 204c of the heads 204a of the bolts 204. As shown in FIG. 18(b), when the thermal contraction has been completed after plastic molding, the recess 192b that is provided annularly has been thermally contracted in a direction as indicated by a hollow arrow. Therefore, at least one of the outer cylindrical end face 198a of the annular member 198 made of metal provided in the recess 192b and the outer cylindrical end faces 204c of the heads 204a of the bolts 204 is brought into contact with the outer inside wall 192c of the recess 192b and fixed. Thus, at least one of the outer cylindrical end face 198a and the outer cylindrical end faces 204c has no gap left between the outer inside wall 192c and itself. Consequently, at least one of the annular member 198 and the bolts 204 can be joined firmly with the tank body 192, so that the excellent hermetical sealability of the opening 197 can be maintained and the mounting accuracy of the annular member can be improved.

As shown in FIG. 19, the bottom surface of the space 200 formed in the annular recess 192b is arranged in a position lower than the bottom surfaces of the annular member 198 and the bolts 204. The drainage passage 192a led out from the bottom surface of the space 200 is provided in the external surface of the tank body 192. Accordingly, water that tends to stay in or around interfaces between the recess 192b and the bottom surfaces of the annular member 198 and bolts 204 is drained out. Consequently, in an automobile to which the above-described structure is applied, a plastic fuel tank having an excellent quality can be installed.

Although preferred embodiments have been described above, the present invention is not limited to the above embodiments, and any modifications may be made as appropriate without departing from the scope of the present invention. For example, only one drainage passage 192a is provided on the external surface of the tank body 192 in the present embodiment, but the number of the drainage passages 192a may be increased as appropriate. Further, the bolts provided in the annular member are not limited to particular embodiments in respect to whether the bolts have heads or not, or how the bolts are fastened to the annular member, as far as their screw thread portions are oriented upward. Furthermore, the present embodiment has been described on the premise that it is applied to a fuel tank of an automobile, but the applicable parts are not limited to the fuel tank of the automobile and, needless to say, generally include plastic parts shaped into a container.

### [Fourteenth Embodiment]

A cover-mounting structure of a plastic container according to a fourteenth embodiment will be described hereinafter with reference made to drawings as appropriate. Hereupon, the positions and directions will be represented with respect to the normal state of operation of the plastic container.

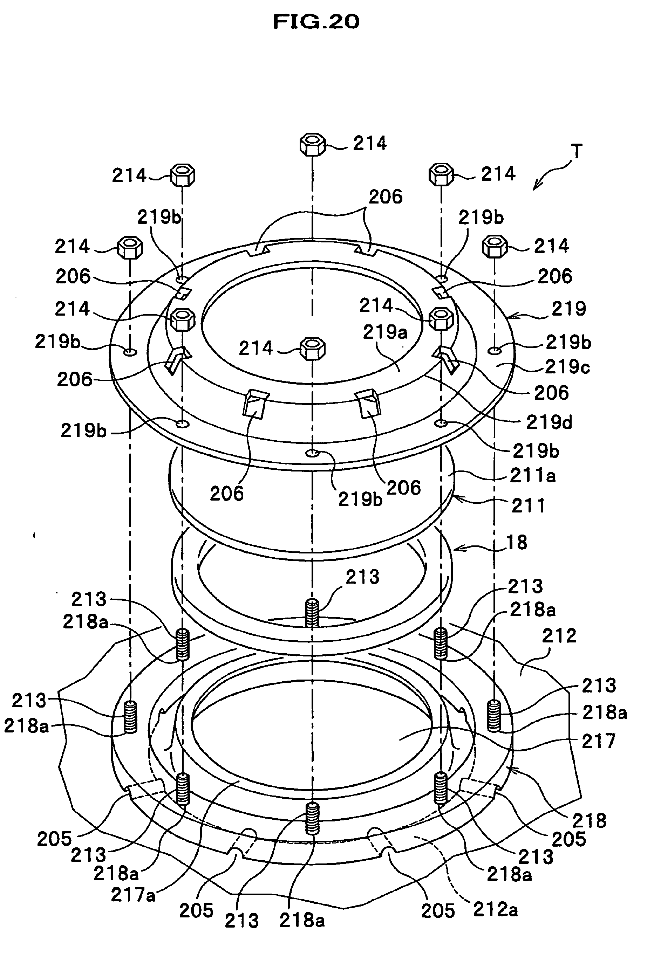

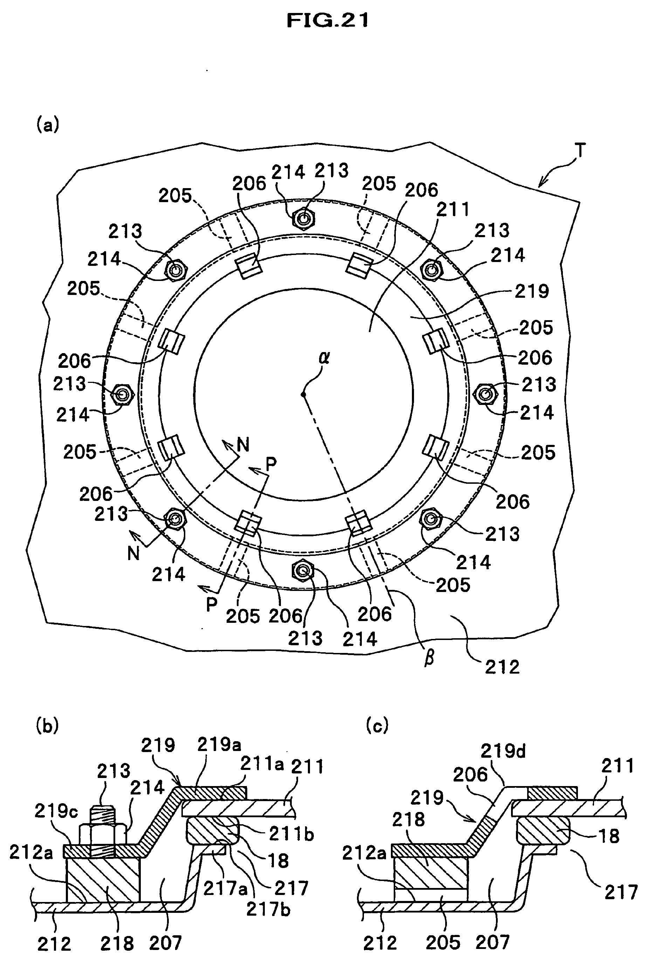

FIG. 20, to which reference is made at first, is an exploded perspective view of a cover-mounting structure of a plastic container according to the fourteenth embodiment in which the plastic container is used for a fuel tank of an automobile. FIG. 21 shows a cover-mounting structure of a plastic container, of which constitutional parts as shown in FIG. 20 have been assembled together; (a) is a plan view, (b) is a vertical sectional view taken along line N-N of (a), and (c) is a vertical sectional view taken along line P-P of (a). In FIGs. 20 and 21, the constitutional parts that are not directly related to the present invention, such as a pump module, are not illustrated.

Referring now to FIG. 20, a description will be given of constitutional parts of a cover-like member mounting structure of a fuel tank T according to the fourteenth embodiment. The fuel tank T corresponds to "plastic container" defined in claims.

The fuel tank T has a round opening 217 on top of a tank body 212. A flange portion 217a is provided at an edge of the opening 217. A cover 211 for closing the opening 217 is discal, and on an inside thereof are provided a fuel feed passage for supplying an automotive engine with fuel fed from a pump module (not shown), a fuel recirculation passage through which unconsumed fuel flows back from the engine, and other components. The cover 211 is as large in diameter as to substantially cover the flange portion 217a when it is mounted on the tank body 212. An annular seal 18 is provided between the flange portion 217a and the cover 211. The seal 18 is not limited in material, and may be formed of, for example, a blend of acrylonitrile-butadiene rubber and polyvinyl chloride, or the like.

An annular member (hereinafter referred to as annular supporting part 218) is provided on an outside wall 212a of the tank body 212 so as to surround the opening 217. Provided in a gap between the supporting part 218 and the outside wall 212a of the tank body 212, on which the supporting part 218 is fixed, are a plurality of through holes 205, ... , (for example, eight of which are provided in the present embodiment and among which six are illustrated) which are substantially evenly spaced along its circumference. Moreover, in the supporting part 218 are provided a plurality of bolts 221, ... (for example, eight of which are provided in the present embodiment), which are located at positions substantially evenly spaced around its circumference but not coincide with the positions of the through holes 205, ... and are fitted and held upright in holes 218a, ... provided in the supporting part 218. Hereupon, the supporting part 218 may be fixed on the outside wall 212a of the tank body 212 by various means, which is not limited to a particular method but may include for example welding and the like. Moreover, the bolts 8, ... may be fixed on the supporting part 218 by various means, which is not limited to a particular method but may include for example screwing and the like.

An annular retainer (hereinafter referred to as annular mounting part 219) includes an inner peripheral portion 219a to rest against the cover 211, and an outer peripheral portion 219c provided with retaining holes 219b, ... through which bolts 221, ... are to be inserted. The retaining holes 219b, ... are fitted on the bolts 221, ... while the cover 211 is being pressed down by the inner peripheral portion 219a, and the outer peripheral portion 219c is then fastened on the supporting part 218 using the bolts 221, ... and the nuts 222, ... , thereby allowing the cover 211 to be mounted on the fuel tank body 212. Moreover, along a bend 219d of the mounting part 219 are provided a plurality of through holes 206, ... (for example, eight of which are provided in the present embodiment), which are substantially evenly spaced around its circumference.

The through holes 206, ... are provided at locations as shown in FIG. 21(a) when the mounting part 219 fixed on the supporting part 218 is viewed from the mounting part 219 side, *i.e.,* on phantom lines β produced from the center α to the through holes 206, ....

The materials of which the supporting part 218, mounting part 219, bolts 221, ... and nuts 222 are formed are not limited, but may preferably be formed of metal in that the cover 211 is firmly fixed and its mount spot is resistant to deformation. Further, in order to prevent rust that would be formed when these metal parts are submerged in water during submergence leak test or the like, the metal to be used may preferably be antirust metal such as stainless steel or the like.

Next, a description will be given of procedural steps for mounting the cover 211 onto the fuel tank body 212 with reference to FIG. 20.

First, the seal 18 is placed on top of the flange 217a around the opening 217, and the cover 211 is then placed on the seal 18. Further, the retaining holes 921b, ... provided in the outer peripheral portion 219c of the mounting part 219 are fitted on the bolts 221, ... while a top surface 211a of the outer edge portion of the cover 211 is being pressed down with the inner peripheral portion 219a of the mounting part 219. Subsequently, the nuts 222, ... are screwed on the bolts 221, ..., and the cover 211 is thereby mounted on the fuel tank body 212.

The following description will be directed to operation and advantageous effects of the cover-like member mounting structure of a fuel tank T according to the fourteenth embodiment of the present invention with reference to FIG. 21.

In FIG. 21(a), which illustrates a cover-mounting structure mounted by following the aforementioned process steps, FIG. 21(b), which is a vertical sectional view taken along line N-N thereof, illustrates a vertical section of a portion where the mounting part 219 is fixed on the supporting part 218. As shown in FIG. 21(b), the mounting part 219, with the inner peripheral portion 219a thereof pressing down the top surface 211a of the outer edge portion of the cover 211, extends out to the supporting part 218, and the outer peripheral portion 219c of the mounting part 219 is fastened using the bolts 221 and the nuts 222, thereby allowing the cover 211 to be mounted onto the fuel tank body 212 in a firm and hermetical manner.

When the cover 211 is firmly mounted on the fuel tank body 212, the seal 18 clamped between an undersurface 211b of the outer edge portion of the cover 211 and a top surface 217b of the flange portion 217a around the opening 217 is pressed so that a secure and good hermetical sealing performance can be achieved.

Next, a description will be given with reference to FIG. 21(c), which is a vertical sectional view taken along line P-P of FIG. 21(a). FIG. 21(c) shows a vertical section including one through hole 205 and one through hole 206. Each through hole 205 is provided between the supporting part 218 and the outside wall 212a of the fuel tank body 212 on which the supporting part 218 is fixed. Each through hole 206 is provided in the bend 219d of the mounting part 219. This allows water to flow through the through holes 205 and the through holes 206, and to fill up space 207 swiftly, when the fuel tank T on which the cover 211 is mounted by following the aforementioned process steps is submerged into a water tank during a submergence leak test. Accordingly, no extra time to wait is required from submergence of the fuel tank T into the water tank, to introduction of pressure-regulated air; therefore, the time for testing can be reduced. Moreover, the through hole 26 is provided so as to allow the space 207 to immediately communicate at its top, and thus air that was in the space 207 at the time of submergence of the fuel tank T into the water tank is discharged through the through holes 206 swiftly. As a result, the evolution of bubbles derived from air in the space 207 during the test can be prevented without fail, and the submergence leak test can be performed with improved accuracy.

Further, since the through holes 205 are provided between the supporting part 218 and the outside wall 212a of the fuel tank body 212 on which the supporting part 218 is fixed, the through holes 205 are provided so as to allow the space 207 to immediately communicate at its bottom. This allows water with which the space 207 is filled to be discharged swiftly through the through holes 205 when the fuel tank T is raised from the water tank after the submergence leak test has been carried out. Moreover, the through holes 205 are provided so as to allow the space 207 to immediately communicate at its top, and thus the pressure of air flowed into the space 207 pushes water in the space 207, so that the water can be discharged more swiftly. Accordingly, a process for drying the fuel tank 1 after the test can be performed with increased ease, and corrosion of constituent parts, which would result from residual water after the test, can be prevented.

### [Fifteenth Embodiment]

A cover-mounting structure of a fuel tank 220 according to a fifteenth embodiment will be described hereinafter with reference to drawings as appropriate. Hereupon, the fuel tank 220 corresponds to "plastic container" set forth in claims.

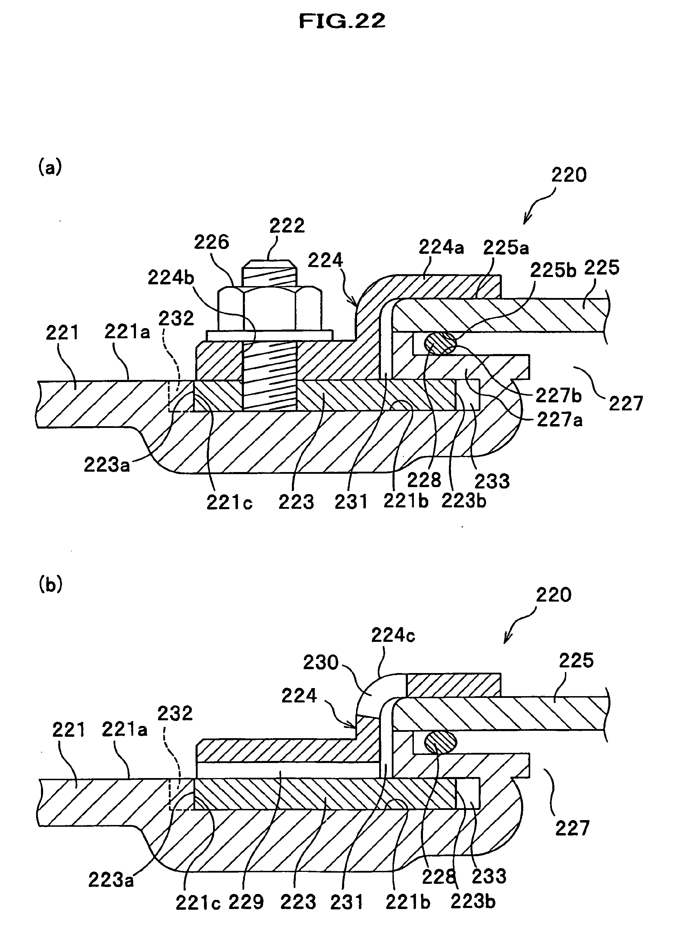

FIGs. 22(a) and 22(b) to which reference is made herein correspond to FIGs. 21(b) and 21(c) to which reference was made in describing the fourteenth embodiment; FIG. 22(a) is a vertical sectional view of a portion where a mounting part and a supporting part are fastened, and FIG. 22(b) is a vertical sectional view of a through hole.

As shown in FIG. 22(a), the fuel tank 220 made of plastic is comprised of a fuel tank body 221 having a recess 221b provided on an outer wall 221a thereof in which recess 221b a supporting part 223 is insert-molded with bolts 222 held upright and substantially evenly spaced around a circumference. While a top surface 225a of an outer edge portion of a cover 225 is being pressed by an inner peripheral portion 224a of a mounting part 224, retainer holes 224b of the mounting part 224 are fitted on the bolts 222, and the mounting part 224 is fastened with nuts 226, so that the cover 225 is mounted on the fuel tank body 221 in a firm and hermetical manner.

When the cover 225 is firmly mounted on the fuel tank body 221, a seal 28 clamped between an undersurface 225b of an outer edge portion of the cover 225 and a top surface 227b of a flange portion 227a around an opening 227 is pressed so that a secure and good hermetical sealing performance can be achieved.

The fuel tank 220 is provided with through holes 229 and through holes 230 as shown in FIG. 22(b). Each through hole 229 is provided between the mounting part 224 and the supporting part 223, and each through hole 230 is provided in a bend 224c of the mounting part 224. Thus, since the fuel tank 220 has through holes 229 allowing the space 231 to immediately communicate at its bottom and further has through holes 230 allowing the space 231 to immediately communicate at its top, the same effects as in the fourteenth embodiment can be achieved.

Further, the supporting part 223 is insert-molded in the recess 221b, and thus firmly joined with the fuel tank body 221. As a result, the hermetical sealing performance of the fuel tank 220 is improved.

The supporting part 223 is insert-molded with an allowance 232 for thermal contraction of the fuel tank body 221 provided as indicated by dashed lines in FIG. 22, and thus the thermal contraction of the fuel tank body 221 to the right in the drawing that progresses as the temperature of plastic material becomes cooler after the insert molding is completed brings an outer cylindrical end face 223a of the supporting part 223 into contact with a wall face 221c of the recess 221b. This allows the supporting part 223 to be fixed with improved accuracy. The thermal contraction of the fuel tank body 221 causes a space 233 to be made between an inner cylindrical wall face 223b of the supporting part 223 and the fuel tank body 221.

Although a preferred embodiment has been described above, the present invention is not limited the above-described embodiment. For example, the bolts and nuts are used when the mounting part is fixed on the supporting part in the present embodiment, but the method of fixing the mounting part is not limited thereto, as far as the method allows the mounting part to be provided to extend out to the supporting part while pressing the cover from outside whereby the mounting part can be fixed on the supporting part.

The through holes as well are not limited to the above embodiments, as far as the holes allow the space formed on a plastic container body side of the mounting part to communicate with outside.

Although the above-described embodiment provides an annular seal between a flange portion provided around the opening of the plastic container body and the cover, the present invention is not particularly limited in terms of sealing means. For example, a cover having a sealing capability may be used to hermetically close the opening of the plastic container body to thereby prevent a leak.

### INDUSTRIAL APPLICABILITY

In a cover-mounting structure of a plastic container,
a seamless annular member is embedded in a portion around an opening of a tank body made of plastic to form an integral part thereof, and thus the strength of fastening between the plastic tank body and the cover can be improved.

In a cover-mounting structure of a plastic container,
an annular member assumes an undivided ring-shaped geometry with no local rigidity variation point that would be involved at seams of a ring-shaped geometry, and thus good hermetical sealing performance between the tank body and the cover can be stably achieved.

In a cover-mounting structure of a plastic container,
an annular member is not cut into an external wall of the tank body made of plastic so as not to sever a barrier layer of the plastic tank body, and thus the possibility of affecting a layer structure thereof can be eliminated.

In a cover-mounting structure of a plastic container,
insert bolts are provided protrusively in an annular member, and with nuts screwed on the bolts, a retainer can be firmly fastened; thus, the strength of fastening between the plastic tank body and the cover can be improved.

In a cover-mounting structure of a plastic container,
a screw hole is provided vertically in an annular member, and with a bolt screwed into the screw hole, a retainer can be firmly fastened; thus, the strength of fastening between the plastic tank body and the cover can be improved.

In a cover-mounting structure of a plastic container,
an annular member and a retainer for fixing the annular member are formed of metal materials, and thus the retainer can be firmly fastened, so that the strength of fastening between the plastic tank body and the cover can be improved.

In a cover-mounting structure of a plastic container,
a thread is formed on an outer or inner cylindrical surface of an annular member, and thus the annular member can be fastened firmly to a retainer, so that the strength of fastening between the plastic tank body and the cover can be improved.

In a cover-mounting structure of a plastic container,
an outer rib comes into contact with a cover prior to an inner rib, which lightly touches or does not touch a flange portion, and thus the outer rib can be brought into secure and close contact with the cover; further, a space for providing a seal can be made between the outer rib and the inner rib, and thus excellent hermetical sealing performance can be achieved.

In a cover-mounting structure of a plastic container,
an inner rib does not strongly press a surface where a seal is placed, and thus deformation of the surface where the seal is placed can be prevented so that good hermetical sealing performance can be achieved.

In a cover-mounting structure of a plastic container,
a space is defined between an outer rib projecting upwardly from an outer edge of a top surface of flange portion, and a seal guide shaped like a letter L in cross section so as to conform to a shape of a corner at an inner edge of the top surface of the flange portion, and further a space where a seal is placed can be made between the outer rib and the seal guide; therefore, the outer rib can come into secure and close contact with the cover, so that good hermetical sealing performance can be achieved.

In a cover-mounting structure of a plastic container,
the seal guide is of a soft resin having a fuel barrier property against HDPE (high-density polyethylene) with solubility parameter of 11 or greater, or of a soft EVOH (alcohol copolymer), and thus has an excellent flexibility and an excellent 5 barrier property, so that a good hermetical sealing performance and an inhibitive effect of preventing HC (hydrocarbon) from being transmitted can be achieved as a sub-seal.

In a cover-mounting structure of a plastic container,
a metal ring has a spring tension acting in such a direction that the portion of the plastic container where the opening is provided is pressed by the cover, and the spring tension serves to make up for the change in positioning and strength between the joined portions of the cover and a portion around the opening, and can thereby maintain a predetermined level of the positioning accuracy and adequate strength; therefore, the change caused by the time-varying plastic materials in positioning and strength between the joined portions of the cover (mount plate) and the tank body can be prevented from lowering.

In a cover-mounting structure of a plastic container,
a retainer has a spring tension acting in such a direction that a portion where an opening is provided is pressed by a cover, and the spring tension serves to make up for the change in positioning and strength between the joined portions of the cover and a portion around the opening, and can thereby maintain a predetermined level of the positioning accuracy and adequate strength; therefore, the change caused by the time-varying plastic materials in positioning and strength between the joined portions of the cover (mount plate) and the tank body can be prevented from lowering.

In a cover-mounting structure of a plastic container,
pump fittings are integrally mounted in the cover, and thus no clearance remains between the pump fittings and the cover; therefore, the hermetical sealing performance between the cover (mount plate) and the tank body can be improved.

In a cover-mounting structure of a plastic container,
a space to be allowed for thermal contraction of plastic is provided between an outer inside wall of an annularly arranged recess and an outer cylindrical end face of the annular member, and thus when the thermal contraction is completed after plastic molding, the outer cylindrical end face of the annular member and outer inside wall of the annular recess come into contact with each other. This allows the annular member and the plastic container body to be firmly joined, serving to maintain a good hermetical sealing performance of the opening, as well as to improve positioning accuracy of the annular member.

In a cover-mounting structure of a plastic container,
the metal annular member is so shaped as to be kept from obstructing the thermal contraction of the plastic container, and thus bending or deformation due to local internal shrinkage of thermally contracting plastic materials can be prevented, so that the metal annular member can be slid smoothly in the recess. Further, the metal annular member includes a plurality of bolts provided protrusively at annularly arranged positions along a peripheral edge of the opening, and thus a good hermetical sealing performance of the opening can be maintained, and positioning accuracy of the annular member can be improved.

In a cover-mounting structure of a plastic container,
the outer inside wall of the recess and the outer cylindrical end face of at least one of the annular member and the bolts are in contact with each other, and thus no clearance remains between the annular member and the outer inside wall of the recess, which allows the annular member and the plastic container body to be firmly joined, serving to maintain a good hermetical sealing performance of the opening, as well as to improve positioning accuracy of the annular member.

In a cover-mounting structure of a plastic container,
the a bottom surface of the space formed in the recess is in a position lower than bottom surfaces of the annular member and the bolts, and thus the outer cylindrical end faces of the bolts can be brought into close contact with the inside wall of the recess, which serves to maintain a good hermetical sealing performance of the opening, as well as to improve positioning accuracy of the annular member and the plastic container body.

In a cover-mounting structure of a plastic container,
a drainage passage is provided in an external surface of the plastic container body to drain water that tends to stay in or around interfaces between the recess and the annular member and between the recess and the bolts, and thus the interfaces between the bottom surfaces of the annular recess and the annular member and spaces around the interfaces are allowed to communicate by means of the drainage passage, which allows water to drain to the outside, so as to prevent the formation of rust, serving to maintain a good hermetical sealing performance of the opening, as well as to improve positioning accuracy of the annular member and the plastic container body.

In a cover-mounting structure of a plastic container,
the annular member is insert-molded with a plastic material from which the plastic container body is molded to form the plastic container body, and thus the annular member and the plastic container body can be mounted with improved accuracy, which provides effective countermeasures when collision or the like occurs.

In a cover-mounting structure of a plastic container,
a through hole is provided to allow a space formed on a side of the retainer facing the plastic container body by fastening the retainer to the annular member to communicate with outside, and thus when the plastic container is submerged into a water tank during a submergence leak test, water is allowed to flow through the through hole to fill up the space for a short period of time. Accordingly, no extra time to wait is required from submergence of the plastic container into the water tank to 5 introduction of pressure-regulated air, and therefore the time for testing can be reduced Moreover, the evolution of bubbles derived from air in the space during the test can be prevented so as not to make an erroneous identification as described above. Consequently, the submergence leak test can be performed with improved accuracy.

In a cover-mounting structure of a plastic container,
the through hole is provided in the retainer, and assuming that the bottom of the plastic container faces toward downward while the cover is located on its top, the through hole allows the space to immediately communicate at its top. Therefore, air that was in the space at the time of submergence of the plastic container into the water tank is discharged swiftly through the through hole by which the space communicates at its top. As a result, in the submergence leak test, the evolution of bubbles derived from air in the space during the test can be prevented without fail, and the submergence leak test can be performed with much more improved accuracy.

In a cover-mounting structure of a plastic container,
the through hole is provided which allows the space to immediately communicate at its bottom, and thus when the plastic container is raised from the water tank after the submergence leak test has been carried out, water with which the space is filled can be discharged swiftly through the through hole. Accordingly, the process for drying the plastic container after the test can be performed with increased ease, and corrosion of constituent parts, which would result from residual water after the test, can be prevented.

## Claims

1. A cover-mounting structure of a plastic container (T) having a cover for closing an opening (107) provided in a plastic container body at least part of which is made of a barrier material,
wherein a portion of the plastic container (T) where the opening (107) is provided has a flange portion (107a);
the cover-mounting structure of the plastic container comprising:
a recess provided annularly along a peripheral edge of the opening (107) at an outside of the plastic container body, with an annular member (108) being embedded integrally in the recess;
the cover (101) resting against the flange portion (107a) to close the opening (107);
a seal (18) provided between the flange portion (107a) and the cover (101) to prevent a leak; and
an annular retainer (109) fastened to the annular member (108) while resting against an external surface of the cover (101),
**characterized by** an outer rib (107f) projecting upwardly from an outer edge of a top surface of the flange portion (107a); and
an inner rib (101c) projecting downwardly from an undersurface of an outer edge portion (101a) of the cover (101) toward the top surface of the flange portion (107a),
wherein the seal (18) is provided in a space (23) defined between the outer rib (107f) and the inner rib (101c); and
wherein the outer rib (107f) comes into contact with the undersurface of the outer edge portion (101b) of the cover (101) when the cover (101) is placed over the opening (107).

2. A cover-mounting structure of a plastic container according to claim 1, wherein a plurality of bolts (111) for fastening the retainer (109) are provided protrusively in the annular member (108).

3. A cover-mounting structure of a plastic container according to claim 1, wherein a screw hole is provided vertically in the annular member (108).

4. A cover-mounting structure of a plastic container according to claim 1, wherein the annular member (108) and the retainer (109) are formed of metal materials.

5. A cover-mounting structure of a plastic container according to claim 1, wherein a thread is formed on an outer or inner cylindrical surface of the annular member (108).

6. A cover-mounting structure of a plastic container (T) having a cover for closing an opening (127) provided in a plastic container body (122) at least part of which is made of a barrier material,
wherein a portion of the plastic container (T) where the opening (127) is provided has a flange portion (127a);
the cover-mounting structure of the plastic container comprising:
a recess provided annularly along a peripheral edge of the opening (127) at an outside of the plastic container body, with an annular member (128) being embedded integrally in the recess;
the cover (121) resting against the flange portion (127a) to close the opening (127);
a seal (18) provided between the flange portion (127a) and the cover (121) to prevent a leak; and
an annular retainer (129) fastened to the annular member (128) while resting against an external surface of the cover (121),
**characterized by**
an outer rib (127f) projecting upwardly from an outer edge of a top surface of the flange portion (127a); and
a seal guide (21) shaped like a letter L in cross section so as to conform to a shape of a corner at an inner edge of the top surface of the flange portion (127a),
wherein the seal (18) is provided in a space (22) defined between the outer rib (127f) and the seal guide (21).

7. A cover-mounting structure of a plastic container according to claim 6, wherein the seal guide (21) is of a soft resin having a fuel barrier property against HDPE (high-density polyethylene) with solubility parameter of 11 or greater, or of a soft EVOH (alcohol copolymer).

8. A cover-mounting structure of a plastic container according to claim 1, comprising a metal ring (10) provided between an area of a top surface of an outer edge portion (141a) of the cover (141) under which area the seal (18) is placed and a surface of the retainer (149) which presses the cover,
wherein the metal ring (10) has a spring tension acting in such a direction that the portion of the plastic container (T) where the opening (147) is provided is pressed by the cover (141).

9. A cover-mounting structure of a plastic container according to claim 1,
wherein the retainer (169) has a spring tension acting in such a direction that the portion where the opening (167) is provided is pressed by the cover (161).

10. A cover-mounting structure of a plastic container according to claim 8 or 9,
wherein pump fittings are integrally mounted in the cover (161).

11. A cover-mounting structure of a plastic container according to claim 4,
wherein in the plastic container body immediately after plastic molding, a space (200) to be allowed for thermal contraction of plastic is provided between an outer inside wall of the recess (192b) and an outer cylindrical end face of the annular member (198).

12. A cover-mounting structure of a plastic container according to claim 11,
wherein the annular member (198) is so shaped as to be kept from obstructing the thermal contraction of the plastic container (T), and includes a plurality of bolts (204) provided protrusively at annularly arranged positions along a peripheral edge of the opening.

13. A cover-mounting structure of a plastic container according to claim 11 or 12,
wherein in the plastic container body (192) thermally contracted after plastic molding, the outer inside wall of the recess (192b) and the outer cylindrical end face of at least one of the annular member (198) and the bolts (204) are in contact with each other.

14. A cover-mounting structure of a plastic container according to claim 11 or 12,
wherein in the plastic container body (192) after plastic molding, a bottom surface of the space (200) is in a position lower than bottom surfaces of the annular member (198) and the bolts (204).

15. A cover-mounting structure of a plastic container according to claim 11 or 12,
wherein in the plastic container body (192) thermally contracted after plastic molding, a drainage passage (192a) is provided in an external surface of the plastic container body to drain water that tends to stay in or around interfaces between the recess (192b) and the annular member (198) and between the recess (192b) and the bolts (198).

16. A cover-mounting structure of a plastic container according to claim 11 or 12,
wherein the annular member (198) is insert-molded with a plastic material from which the plastic container body (192) is molded to form the plastic container body.

## Patentansprüche

1. Deckelmontagestruktur eines Kunststoffbehälters (T), der einen Deckel zum Verschließen einer Öffnung (107) aufweist, die in einem Kunststoffbehälterkörper vorgesehen ist, von dem zumindest ein Teil aus Barrierematerial hergestellt ist,
worin ein Abschnitt des Kunststoffbehälters (T) dort, wo die Öffnung (107) vorgesehen ist, einen Flanschabschnitt (107a) aufweist;
wobei die Deckelmontagestruktur des Kunststoffbehälters umfasst:
eine Vertiefung, die ringförmig entlang einem Umfangsrand der Öffnung (107) an einer Außenseite des Kunststoffbehälterkörpers vorgesehen ist, wobei ein ringförmiges Element (108) integral in die Vertiefung eingebettet ist;
den Deckel (101), der an dem Flanschabschnitt (107a) anliegt, um die Öffnung (107) zu verschließen;
eine Dichtung (18), die zwischen dem Flanschabschnitt (107a) und dem Deckel (101) vorgesehen ist, um ein Leck zu verhindern; und
einen ringförmigen Halter (109), der an dem ringförmigen Element (108) befestigt ist, während er an einer Außenoberfläche des Deckels (101) anliegt,
**gekennzeichnet durch** eine Außenrippe (107f), die von einem Außenrand einer Oberseite des Flanschabschnitts (107a) nach oben vorsteht; und
eine Innenrippe (101c), die von einer Unterseite eines Außenrandabschnitts (101a) des Deckels (101) zur Oberseite des Flanschabschnitts (107a) hin nach unten vorsteht,
worin die Dichtung (18) in einem Zwischenraum (23) vorgesehen ist, der zwischen der Außenrippe (107f) und der Innenrippe (101c) definiert ist; und
worin die Außenrippe (107f) mit der Unterseite des Außenrandabschnitts (101b) des Deckels (101) in Kontakt kommt, wenn der Deckel (101) auf der Öffnung (107) angeordnet wird.

2. Deckelmontagestruktur eines Kunststoffbehälters nach Anspruch 1, worin eine Mehrzahl von Bolzen (111) zum Befestigen des Halters (109) in dem ringförmigen Element (108) vorstehend vorgesehen ist.

3. Deckelmontagestruktur eines Kunststoffbehälters nach Anspruch 1, worin ein Gewindeloch vertikal in dem ringförmigen Element (108) vorgesehen ist.

4. Deckelmontagestruktur eines Kunststoffbehälters nach Anspruch 1, worin das ringförmigen Element (108) und der Halter (109) aus Metallmaterialien gebildet sind.

5. Deckelmontagestruktur eines Kunststoffbehälters nach Anspruch 1, worin ein Gewinde an einer zylindrischen Außen- oder Inneoberfläche des ringförmigen Elements (108) ausgebildet ist.

6. Deckelmontagestruktur eines Kunststoffbehälters (T), der einen Deckel zum Verschließen einer Öffnung (127), die in einem Kunststoffbehälterkörper (122) vorgesehen ist, von dem zumindest ein Teil aus Barrierematerial hergestellt ist,
worin ein Abschnitt des Kunststoffbehälters (T) dort, wo die Öffnung (127) vorgesehen ist, einen Flanschabschnitt (127a) aufweist;
wobei die Deckelmontagestruktur des Kunststoffbehälters umfasst:
eine Vertiefung, die ringförmig entlang einem Umfangsrand der Öffnung (127) an einer Außenseite des Kunststoffbehälterkörpers vorgesehen ist, wobei ein ringförmiges Element (128) integral in die Vertiefung eingebettet ist;
den Deckel (121), der an dem Flanschabschnitt (127a) anliegt, um die Öffnung (127) zu verschließen;
eine Dichtung (18), die zwischen dem Flanschabschnitt (127a) und dem Deckel (121) vorgesehen ist, um ein Leck zu verhindern; und
einen ringförmigen Halter (129), der an dem ringförmigen Element (128) befestigt ist, während er an einer Außenoberfläche des Deckels (121) anliegt; **gekennzeichnet durch** eine Außenrippe (127f), die von einem Außenrand einer Oberseite des Flanschabschnitts (127a) nach oben vorsteht;
eine Dichtungsführung (21), die im Querschnitt wie ein Buchstabe L geformt ist, in Anpassung an die Form einer Ecke an einem Innenrand der Oberseite des Flanschabschnitts (127a),
worin die Dichtung (18) in einem Zwischenraum (22) vorgesehen ist, der zwischen der Außenrippe (127f) und der Dichtungsführung (21) definiert ist.

7. Deckelmontagestruktur eines Kunststoffbehälters nach Anspruch 6, worin die Dichtungsführung (21) aus Weichharz ist, das eine Kraftstoffbarriereeigenschaft gegenüber HDPE (hochdichtem Polyethylen) mit einem Löslichkeitsparameter von 11 oder größer hat, oder aus weichem EVOH (Alkoholcopolymer).

8. Deckelmontagestruktur eines Kunststoffbehälters nach Anspruch 1, umfassend einen Metallring (10), der zwischen einem Bereich einer Oberseite eines Außenrandabschnitts (141a) des Deckels (141), unter welchem Bereich die Dichtung (18) angeordnet ist, und einer Oberfläche des Halters (149), die auf den Deckel drückt, vorgesehen ist,
worin der Metallring (10) eine Federspannung hat, die in einer derartigen Richtung wirkt, dass der Abschnitt des Kunststoffbehälters (T) dort, wo die Öffnung (147) vorgesehen ist, von dem Deckel (141) unter Druck gesetzt wird.

9. Deckelmontagestruktur eines Kunststoffbehälters nach Anspruch 1, worin der Halter (169) eine Federspannung hat, die in einer derartigen Richtung wirkt, dass der Abschnitt dort, wo die Öffnung (167) vorgesehen ist, von dem Deckel (161) unter Druck gesetzt wird.

10. Deckelmontagestruktur eines Kunststoffbehälters nach Anspruch 8 oder 9, worin Pumpenanschlüsse integral in dem Deckel (161) angebracht sind.

11. Deckelmontagestruktur eines Kunststoffbehälters nach Anspruch 4, worin in dem Kunststoffbehälterkörper unmittelbar nach der Kunststoffformung ein Zwischenraum (100), der eine thermische Kontraktion von Kunststoff erlaubt, zwischen einer äußeren Innenwand der Vertiefung (192b) und einer äußeren zylindrischen Endfläche des ringförmigen Elements (198) vorgesehen ist.

12. Deckelmontagestruktur eines Kunststoffbehälters nach Anspruch 11, worin das ringförmigen Element (198) so gestaltet ist, dass es die thermische Kontraktion des Kunststoffbehälters (T) nicht behindert, und eine Mehrzahl von Bolzen (204) enthält, die an ringförmig angeordneten Positionen entlang einem Umfangsrand der Öffnung vorstehend vorgesehen sind.

13. Deckelmontagestruktur eines Kunststoffbehälters nach Anspruch 11 oder 12, worin in dem Kunststoffbehälterkörper (192), der nach der Kunststoffformung thermisch kontrahiert ist, die äußere Innenwand der Vertiefung (192b) und die äußere zylindrische Endfläche des ringförmigen Elements (198) und/oder der Bolzen (204) miteinander in Kontakt stehen.

14. Deckelmontagestruktur eines Kunststoffbehälters nach Anspruch 11 oder 12, worin in dem Kunststoffbehälterkörper (192) nach der Kunststoffformung eine Bodenoberfläche des Zwischenraums (200) in einer Position ist, die tiefer ist als die Bodenflächen des ringförmigen Elements (198) und der Bolzen (204).

15. Deckelmontagestruktur eines Kunststoffbehälters nach Anspruch 11 oder 12, worin in dem Kunststoffbehälterkörper (192), der nach der Kunststoffformung thermisch kontrahiert ist, ein Ablaufkanal (192a) in einer Außenoberfläche des Kunststoffbehälterkörpers vorgesehen ist, um Wasser abzuleiten, das tendenziell in oder um Grenzen zwischen der Vertiefung (192b) und dem ringförmigen Element (198) und zwischen der Vertiefung (192b) und den Bolzen (198) stehen bleibt.

16. Deckelmontagestruktur eines Kunststoffbehälters nach Anspruch 11 oder 12, worin das ringförmigen Element (198) mit Kunststoffmaterial, aus dem der Kunststoffbehälterkörper (192) zur Bildung des Kunststoffbehälterkörpers geformt ist, eingeformt ist.

## Revendications

1. Structure de montage de couvercle d'un conteneur en matière plastique (T) comportant un couvercle destiné à fermer une ouverture (107) pratiquée dans un corps de conteneur en matière plastique dont au moins une partie est fabriquée en un matériau formant barrière,
dans laquelle une partie du conteneur en matière plastique (T) où l'ouverture (107) est pratiquée comporte une partie de rebord (107a) ;
la structure de montage de couvercle du conteneur en matière plastique comprenant:
un évidement pratiqué de façon annulaire le long d'un bord périphérique de l'ouverture (107), à l'extérieur du corps de conteneur en matière plastique, un élément annulaire (108) étant enfoncé de façon intégrée dans l'évidement ;
le couvercle (101) reposant contre la partie de rebord (107a) afin de fermer l'ouverture (107);
un joint d'étanchéité (18) disposé entre la partie de rebord (107a)et le couvercle (101) afin d'empêcher une fuite ; et
un dispositif de retenue annulaire (109) fixé à l'élément annulaire (108) tout en reposant contre une surface externe du couvercle (101),
**caractérisée par** une nervure extérieure (107f) faisant saillie vers le haut à partir d'un bord extérieur d'une surface de dessus de la partie de rebord (107a) ; et
par une nervure intérieure (101c) faisant saillie vers le bas à partir d'une surface de dessous d'une partie de bord extérieur (107a) du couvercle (101), en direction de la surface de dessus de la partie de rebord (107a),
structure dans laquelle le joint d'étanchéité (18) est disposé dans un espace (23) défini entre la nervure extérieure (107f) et la nervure intérieure (101c) ; et
dans laquelle la nervure extérieure (107f) vient au contact de la surface de dessous de la partie de bord extérieur (101b) du couvercle (101) lorsque le couvercle (101) est placé par dessus l'ouverture (107).

2. Structure de montage de couvercle d'un conteneur en matière plastique selon la revendication 1, dans laquelle une pluralité de boulons (111) destinés à fixer le dispositif de retenue (109) sont disposés de façon saillante dans l'élément annulaire (108).

3. Structure de montage de couvercle d'un conteneur en matière plastique selon la revendication 1, dans laquelle un trou de vis est ménagé verticalement dans l'élément annulaire (108).

4. Structure de montage de couvercle d'un conteneur en matière plastique selon la revendication 1, dans laquelle l'élément annulaire (108) et le dispositif de retenue (109) sont formés de matériaux métalliques.

5. Structure de montage de couvercle d'un conteneur en matière plastique selon la revendication 1, dans laquelle un filet est formé sur une surface cylindrique extérieure ou intérieure de l'élément annulaire (108).

6. Structure de montage de couvercle d'un conteneur en matière plastique (T) comportant un couvercle destiné à fermer une ouverture (127) pratiquée dans un corps de conteneur en matière plastique (122), dont au moins une partie est fabriquée en un matériau formant barrière,
dans laquelle une partie du conteneur en matière plastique (T) où l'ouverture (127) est pratiquée comporte une partie de rebord (127a) ;
la structure de montage de couvercle du conteneur en matière plastique comprenant :
un évidement disposé de façon annulaire le long d'un bord périphérique de l'ouverture (127), à l'extérieur du corps de conteneur en matière plastique, un élément annulaire (128) étant enfoncé de façon intégrée dans l'évidement ;
le couvercle (121) reposant contre la partie de rebord (127a) afin de fermer l'ouverture (127) ;
un joint d'étanchéité (18) disposé entre la partie de rebord (127a)et le couvercle (121) afin d'empêcher une fuite ; et
un dispositif de retenue annulaire (129) fixé à l'élément annulaire (128) tout en reposant contre une surface externe du couvercle (121),
**caractérisée par** une nervure extérieure (127f) faisant saillie vers le haut à partir d'un bord extérieur d'une surface de dessus de la partie de rebord (127a) ; et
par un guide de joint d'étanchéité (21) dont la forme en section droite est celle de la lettre L de façon à épouser la forme d'un coin, à un bord intérieur de la surface de dessus de la partie de rebord (127a),
structure dans laquelle le joint d'étanchéité (18) est disposé dans un espace (22) défini entre la nervure extérieure (127f) et le guide de joint d'étanchéité (21).

7. Structure de montage de couvercle d'un conteneur en matière plastique selon la revendication 6, dans laquelle le guide de joint d'étanchéité (21) est en résine souple présentant une propriété de barrage au carburant par rapport au HDPE (polyéthylène haute densité) avec un paramètre de solubilité de 11 ou plus, ou en EVOH souple (copolymère d'alcool).

8. Structure de montage de couvercle d'un conteneur en matière plastique selon la revendication 1, comprenant une bague métallique (10) disposée entre une zone d'une surface de dessus d'une partie de bord extérieur (141a) du couvercle (141) sous laquelle le joint d'étanchéité (18) est placé et une surface du dispositif de retenue (149) qui presse le couvercle,
structure dans laquelle la bague métallique (10) exerce une tension de ressort agissant suivant une direction telle que la partie du conteneur en matière plastique (T) où l'ouverture (147) est pratiquée est pressée par le couvercle (141).

9. Structure de montage de couvercle d'un conteneur en matière plastique selon la revendication 1, dans laquelle le dispositif de retenue (169) exerce une tension de ressort agissant suivant une direction telle que la partie où l'ouverture (167) est pratiquée est pressée par le couvercle (161).

10. Structure de montage de couvercle d'un conteneur en matière plastique selon la revendication 8 ou 9, dans laquelle des raccords de pompe sont montés d'un seul tenant dans le couvercle (161).

11. Structure de montage de couvercle d'un conteneur en matière plastique selon la revendication 4, dans laquelle, dans le corps de conteneur en matière plastique et immédiatement à la suite du moulage de la matière plastique, un espace (200) devant être laissé en vue de la contraction thermique de la matière plastique est ménagé entre une paroi intérieure externe de l'évidement (192b) et une face d'extrémité cylindrique externe de l'élément annulaire (198).

12. Structure de montage de couvercle d'un conteneur en matière plastique selon la revendication 11, dans laquelle l'élément annulaire (198) présente une forme l'empêchant de gêner la contraction thermique du conteneur en matière plastique (T), et inclut une pluralité de boulons (204) disposés de façon saillante à des positions agencées de façon annulaire le long d'un bord périphérique de l'ouverture.

13. Structure de montage de couvercle d'un conteneur en matière plastique selon la revendication 11 ou 12, dans laquelle, dans le corps de conteneur en matière plastique (192) contracté par voie thermique et après le moulage de la matière plastique, la paroi intérieure externe de l'évidement (192b) et la face d'extrémité cylindrique externe d'au moins l'un de l'élément annulaire (198) et des boulons (204) sont en contact mutuel.

14. Structure de montage de couvercle d'un conteneur en matière plastique selon la revendication 11 ou 12, dans laquelle, dans le corps de conteneur en matière plastique (192) et après le moulage de la matière plastique, une surface de fond de l'espace (200) se trouve dans une position plus basse que celle des surfaces de fond de l'élément annulaire (198) et des boulons (204).

15. Structure de montage de couvercle d'un conteneur en matière plastique selon la revendication 11 ou 12, dans laquelle, dans le corps de conteneur en matière plastique (192) contracté par voie thermique après le moulage de la matière plastique, un passage de drainage (192a) est ménagé dans une surface externe du corps de conteneur en matière plastique de façon à drainer l'eau qui tend à demeurer dans ou autour des interfaces entre l'évidement (192b) et l'élément annulaire (198) et entre l'évidement (192b) et les boulons (198).

16. Structure de montage de couvercle d'un conteneur en matière plastique selon la revendication 11 ou 12, dans laquelle, l'élément annulaire (198) est moulé par insertion avec une matière plastique à partir de laquelle le corps de conteneur en matière plastique (192) est moulé afin de former le corps de conteneur en matière plastique.
